# EUROPEAN PATENT SPECIFICATION

(11) **EP 4 562 409 B1**
(45) Date of publication and mention of the grant of the patent: **23.09.2026**
(21) Application number: 23744800.6
(22) Date of filing: 20.07.2023
(51) Int. Cl.: G01N 21/71, G01J 5/00

(54) **ESTIMATING ELEMENT CONTENT IN MOLTEN MATERIAL AT OPENINGS OF METALLURGICAL VESSELS**
ABSCHÄTZUNG VON ELEMENTENANTEIL IN FLÜSSIGEM MATERIAL AN ÖFFNUNGEN METALLURGISCHER BEHÄLTER
ESTIMATION DE TENEUR D'UN ÉLÉMENT DANS MATERIAL LIQUIDE À ORIFICES DE VAISSEAUX MÉTALLURGIQUES

(30) Priority: 25.07.2022 LU 502564
(43) Date of publication of application: 04.06.2025
(73) Proprietor: Paul Wurth S.A., 1122 Luxembourg (LU)
(72) Inventor: VAN DORPE, Pierre, 6700 Arlon (BE); MICAK, Juraj, 2410 Strassen (LU); SCHOCKAERT, Cédric, 9542 Wiltz (LU)
(74) Representative: Office Freylinger
(86) International application number: PCT/EP2023/070224
(87) International publication number: WO 2024/022955

(56) References cited:
- WO-A1-2019/220800
- WO-A1-90/10720
- US-A1- 2021 216 680
- PAUNA H. ET AL: "Optical emission spectroscopy as a method to improve the process automation of electric arc furnaces and ladle furnaces", IFAC-PAPERSONLINE, vol. 55, no. 2, 1 January 2022 (2022-01-01), DE, pages 78 - 83, XP093014968, ISSN: 2405-8963, DOI: 10.1016/j.ifacol.2022.04.173
- PICON ARTZAI ET AL: "Ladle Furnace Slag Characterization Through Hyperspectral Reflectance Regression Model for Secondary Metallurgy Process Optimization", IEEE TRANSACTIONS ON INDUSTRIAL INFORMATICS, IEEE SERVICE CENTER, NEW YORK, NY, US, vol. 14, no. 8, 1 August 2018 (2018-08-01), pages 3506 - 3512, XP011688147, ISSN: 1551-3203, [retrieved on 20180806], DOI: 10.1109/TII.2017.2773068
- QIANG ZENG ET AL: "Composition and Temperature Monitoring of Molten Metal by a Combined LIBS-IR Thermometry System", JOURNAL OF APPLIED SPECTROSCOPY, NEW YORK,NY, US, vol. 85, no. 5, 9 November 2018 (2018-11-09), pages 817 - 822, XP036642224, ISSN: 0021-9037, [retrieved on 20181109], DOI: 10.1007/S10812-018-0723-4
- PAUNA HENRI ET AL: "Optical Emission Spectroscopy as an Online Analysis Method in Industrial Electric Arc Furnaces", vol. 91, no. 11, 27 April 2020 (2020-04-27), DE, pages 2000051, XP093014962, ISSN: 1611-3683, Retrieved from the Internet <URL:https://onlinelibrary.wiley.com/doi/full-xml/10.1002/srin.202000051> DOI: 10.1002/srin.202000051
- MYAKALWAR ASHWIN KUMAR ET AL: "LIBS as a Spectral Sensor for Monitoring Metallic Molten Phase in Metallurgical Applications-A Review", MINERALS, vol. 11, no. 10, 30 September 2021 (2021-09-30), pages 1073, XP093009249, DOI: 10.3390/min11101073

## Description

### Technical Field

In general, the disclosure relates to metallurgical vessels or furnaces, and more particularly, the disclosure relates to computer systems, methods and computer-program products to process measurement data taken during loading and during casting processes.

### Background

The metallurgical industry ("iron and steel industry") is known for using all kind of large-scale containers that contain liquid materials at least during many production stages. Simplified, metallurgical vessels are devices to produce and to transport metals. Typically, the vessels keep materials for a couple of hours at a relatively high temperature to let materials melt, to trigger chemical reactions (e.g., to convert ore to metal) or the like. Openings in the vessels allow molten material to flow out from the vessel (or to flow into the vessel).

Typical examples for metallurgical vessels comprise furnaces. Furnaces have several openings and sections. Again simplified, there is an inlet opening at the top of the furnace and a corresponding section to supply materials (such as "feedstock inlets", usually not yet molten), and there are one or more exit openings at the button (such as "tap-holes") with corresponding sections (usually called "cast houses").

A prominent example of such furnaces are blast furnaces that produce iron (i.e., "pig iron" to be more specific). Blast furnaces have further openings, such as tuyeres. While the chemical reactions take place, the exit openings at the lower part of the furnace remain closed by clay (also called "mud", or similar). Material does not leave the furnace.

From time to time, the operator uses a drilling machine to remove the clay. This process is well-known as "tapping" and opens the tap-hole.

In the following processing step - usually called "casting" or "cast" - the molten materials (i.e., metal and slag) then flow through that tap-hole into a runner and further to other vessels. Casting usually takes a couple of hours (to remove molten materials from the furnace, in the volume of, for example, 2.500 cubic meters).

During casting, the operator can inspect samples of the molten material for chemical composition, temperature, appearance and the like. The operator can take material samples by a tool (such as an immersion lance), for example, from the runner or from the skimmer (the mechanical arrangement that separates metal from slag).

Sensors are distributed in various locations of the furnace, and they can provide measurement data at substantially any time. The operator uses measurement data to finetune the operation of the furnace, usually with optimization targets in mind, such as to minimize energy consumption or to minimize emissions to the environment (such as CO₂ emissions). In other words, the data relate to the amount of coal or other fuels in the materials, to the energy used to heat up the furnace, and so on.

Temperature measurements at the tap-hole (or at other locations) are of particular importance. They relate to the temperature of the molten metal (such as "hot metal temperature" HMT) and to the temperature of the slag.

Other measurements are targeted to the chemical composition of the materials, such to identify the content of silicon (Si) in the metal.

However, there are challenges, among them the following:
- The operator can not take samples all of the time during casting. Taking material samples creates a relatively high safety risk.
- On the other hand, contact-less measurement tools may be not be accurate all of the time. Two reasons should be mentioned: The tap-hole may be obfuscated by fume or otherwise, and the materials at the tap-hole (i.e., metal and slag) have different emissivity (effectiveness in emitting energy as thermal radiation) at different wavelengths that affect the accuracy.
- Alternative measurement techniques such as laser-induced plasma spectrometry (LIPS) may create further safety risks (due to the application of laser and the generation of plasma).

A recent publication by Pauna et al. describes the application of a spectrometer during steel processing ("Optical emission spectroscopy as a method to improve the process automation of electric arc furnaces and ladle furnaces" ScienceDirect, IFAC PapersOnLine 55-2 (2022) 78-83)

### Summary

The current invention concerns a computer-implemented method according to claim 1, to estimate the content of a particular chemical element in molten material that is available at an opening of a metallurgical vessel, a corresponding computer program product according to claim 11 and computer system according to claim 12; and a system according to claim 13, for estimating the content of a particular chemical element in molten material that is available at an opening of a metallurgical vessel.

A pyrometer is mechanically arranged at the vessel in a monitoring distance. The pyrometer monitors the opening, and the computer receives radiation data from the pyrometer. Radiation data represent the thermal radiation from the material at the opening, in at least two wavelengths.

The computer operates a processing module that processes the radiation data as feature-enhanced radiation data. Feature-enhancing increases the estimation accuracy. The processing module has a regression model to estimate the content of the particular chemical element (i.e., "content data"), and the processing module has been trained in advance.

In embodiments, the pyrometer can measure the radiation from the tap-hole of a blast furnace. To further increase accuracy, further sensor data are processed optionally.

A computer-implemented method is provided to estimate the content of a particular chemical element in molten material (that is available at an opening of a metallurgical vessel).

From a pyrometer that is arranged to monitor the opening, a computer receives radiation data that represent the thermal radiation from the molten material at the opening, for at least two wavelengths.

The computer operates a feature-enhancer module to identify features from the radiation data and thereby provides feature data according to a plurality of feature enhancement rules. The radiation data together with the feature data is collectively referred to as feature-enhanced radiation data. The computer operates a processing module that processes the feature-enhanced radiation data, wherein the processing module has a regression model to estimate the content of the particular chemical element, and wherein the processing module has been trained in advance.

Optionally, the step operating the processing module comprises to operate a module that has been trained by training data collected during a data-collection phase, wherein the training data is a combination of historical radiation data, and historical content data obtained by measurements on samples taken from the molten material at the opening. Training data further comprises the feature data that are identified according to the plurality of feature enhancement rules.

Optionally, the feature data have been identified according to the plurality of feature enhancement rules when the data-collection phase has been completed. In view of the time, there are in principle two options: (i) the feature data can be stored, for example, together with the historical radiation data (as de facto historical feature data), or (ii) the feature data can be calculated according to the rules when needed (such as for training the processing module, for operating the processing module).

Optionally, in a further receiving step, the computer receives sensor data from sensors that are arranged to monitor the vessel; and in the step operating the processing module, the computer processes the feature-enhanced radiation data in combination with the sensor data.

Optionally, after receiving sensor data, the computer performs adapting the sensor data to obtain intermediate data. Thereby the computer performs the step operating the processing module with the intermediate data.

Optionally, the computer performs adapting by an auxiliary machine learning tool. The tool can be an autoencoder.

Optionally, the computer performs further steps: from a camera, it receives one or more images showing the opening or showing the path between the opening and the pyrometer. It classifies the one or more images to identify phenomena. The phenomena selectively comprise at least one of the following: accretion, fumes or reflections, located in the path; degree of alignment of the pyrometer to the opening, as well as share of metal and slag on the images. The computer classifies the radiation data from the pyrometer as reliable radiation data or non-reliable radiation data, according to the identified phenomena. As mentioned, the computer processes the radiation data to estimate the content of the particular chemical element, but investigating reliability can be regarded as a "quality assurance measure" that eventually lets the computer disregard certain estimations automatically. For non-reliable radiation data, feature enhancing is not required.

Optionally, the molten material is a composition that comprises molten metal or a metal alloy, and wherein the particular chemical element is selected from Carbon, Silicon, Iron and Sulphur.

Optionally, the method steps are applied for the metallurgical vessel being a blast furnace, for that the opening comprises a tap-hole and runner to transport the material away from the blast furnace during casting.

Optionally, the computer performs the further step of presenting the estimation with the content data to an operator of the blast furnace.

In repetitions, the method can be used to control the operation of the vessel.

A computer program product that, when loaded into a memory of a computer system and executed by at least one processor of the computer system, causes the computer system to perform the steps of the computer-implemented method.

A computer system comprises a plurality of modules which perform the steps of the computer-implemented method.

A system is provided for estimating the content of a particular chemical element in molten material that is available at an opening of a metallurgical vessel.

A pyrometer that is adapted to monitor the opening and to provide radiation data that represent the thermal radiation from the molten material at the opening, for at least two wavelengths. A camera is adapted to monitor the opening or the path between the opening and the pyrometer, to provide one or more images showing the opening or the path. A computer has a feature-enhancer module, an estimation module and an image classification module. The feature-enhancer module is adapted to process the radiation data to feature data according to a plurality of feature enhancement rules. As used herein, the radiation data together with the feature data becomes (i.e., is collectively called) feature-enhanced radiation data. The estimation module is adapted to process the feature-enhanced radiation data with a regression model to provide an estimation with preliminary content data for the particular chemical element in the molten material. The estimation module has been trained by training data collected during a data collection phase. The collected data is a combination of historical radiation data and historical content data (obtained by measurements on samples taken from the molten material at the opening). The training data further comprises features data that are identified according to the plurality of feature enhancement rules. The image classification module is adapted to classify the one or more images to identify phenomena at the opening or at the path, and to subsequently - according to the identified phenomena - provide a reliability classification RC for the radiation data, so that the computer outputs preliminary content data as content data only if the reliability classification RC complies with a pre-defined rule.

Optionally, the phenomena selectively comprise at least one of the following: accretion, fumes or reflections, located in the path; a degree of alignment of the pyrometer to the opening, and the share of metal and slag on the images.

### Brief Description of the Drawings

Embodiments of the present invention will now be described in detail with reference to the attached drawings, in which:
FIG. 1 illustrates metallurgical vessels in much simplified side views, as well as illustrates an operator who uses content data to control the operation of the vessels;
FIG. 2 illustrates a blast furnace being an example for a vessel, equipped with a pyrometer, during a data-collection phase;
FIG. 3A and 3B illustrate a computer with a processing module during a training phase, wherein FIG. 3B further shows a feature enhancer module;
FIG. 4 illustrates the blast furnace, still equipped with the pyrometer, during an estimation phase;
FIGS. 5A and 5B illustrate a computer-implemented method to estimate the content of a particular chemical element in molten material that is available at an opening of the metallurgical vessel, wherein FIG. 5A also illustrates an overview to the data-collection phase, the training phase, and the estimation phase, and wherein FIG. 5B also illustrates optional steps;
FIG. 6 illustrates the vessel in association with the pyrometer and with a camera, to symbolize sensors that provide data to the computer;
FIGS. 7A and 7B illustrate time-series with radiation data as well as with sensor data, wherein FIG. 7A shows radiation and sensor data and wherein FIG. 7B shows the application of feature enhancement rules to further obtain feature data;
FIG. 8 illustrates images from the camera, wherein metal and slag are differentiated by classification so that the classification provides sensor data as well;
FIG. 9 illustrates images from the camera, with phenomena;
FIG. 10 illustrates an overview to the blast furnace and to the computer; and
FIG. 11 illustrates a generic computer.

### Detailed Description

### Writing convention

The description occasionally refers to human operators performing different roles, such as the role of the vessel operator, the role of the sample operator (or rather sample-taking operator) and so on. Roles can be performed by the same person, or by different persons.

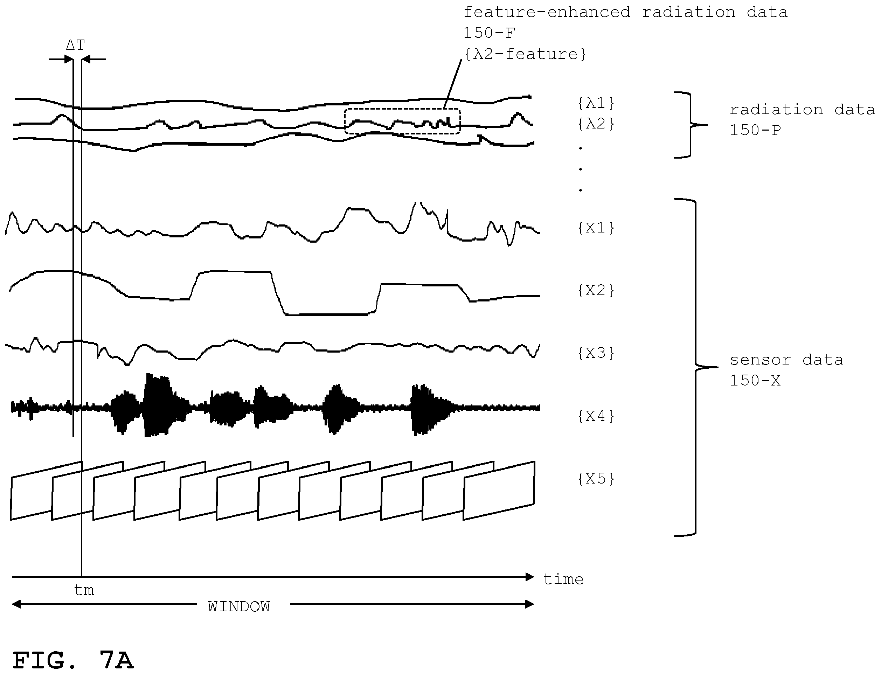

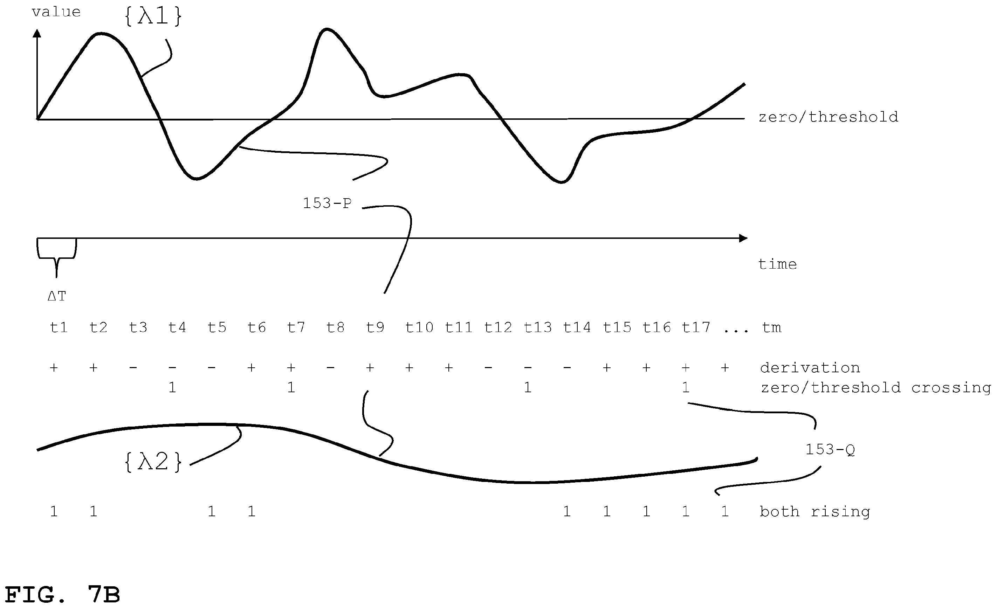

The description occasionally refers to time-series with data. The notation { } indicates a single-variate time-series, and the notation {{ }} indicates a multi-variate time-series. For convenience, a more detailed introduction into time-series is given at the end of this description, in connection with FIGS. 7A and 7B.

As used herein, the notation "the computer" (in singular, with or without reference) stands for a computing function or for a function of a computer-implemented module (such as a processing module). The computing functions can be distributed to different physical computers.

The figures also illustrate a computer program or a computer program product. The computer program product - when loaded into a memory of a computer and being executed by at least one processor of the computer - causes the computer to perform the steps of a computer-implemented method. In other words, the program provides the instructions for the computer-implemented modules.

From a different perspective, the figures illustrate the modules of a computer system comprising a plurality of computer-implemented function modules which, when executed by the computer system, perform the steps of the computer-implemented method.

While the description focuses on the computer that executes the computer-implemented method, it will occasionally place the computer and the method into the context of an industrial system in that the metallurgical vessel is a system component.

The description will refer to technologies that are already known in the art, among them the following:
- A controller can implement a control loop in the industrial system. The description thereby explains a use-case of the results (such as content data) that the computer provides when executing the method. The control loop does not have to be implemented by the controller, in some situations it might be sufficient if the vessel operator looks at content data and interacts with the vessel accordingly.
- Auxiliary machine learning (ML) tools provide intermediate data to the computer, by using technologies that are commercially available, such as for classifying images to obtain the classification data as intermediate data.

As a consequence, implementation details for the controller and for the auxiliary ML tools are available to the skilled person.

In the context of this patent application, industrial systems (or industrial machines) are not considered to be computer-implemented modules (because they do not perform the method steps).

The description writes "sampling interval" as used in signal processing as the time interval for that data becomes available in digital form, but uses "sample-taking time-points" for the time points by that the sample operator takes physical samples.

The term "element" stands for a chemical element.

### Overview

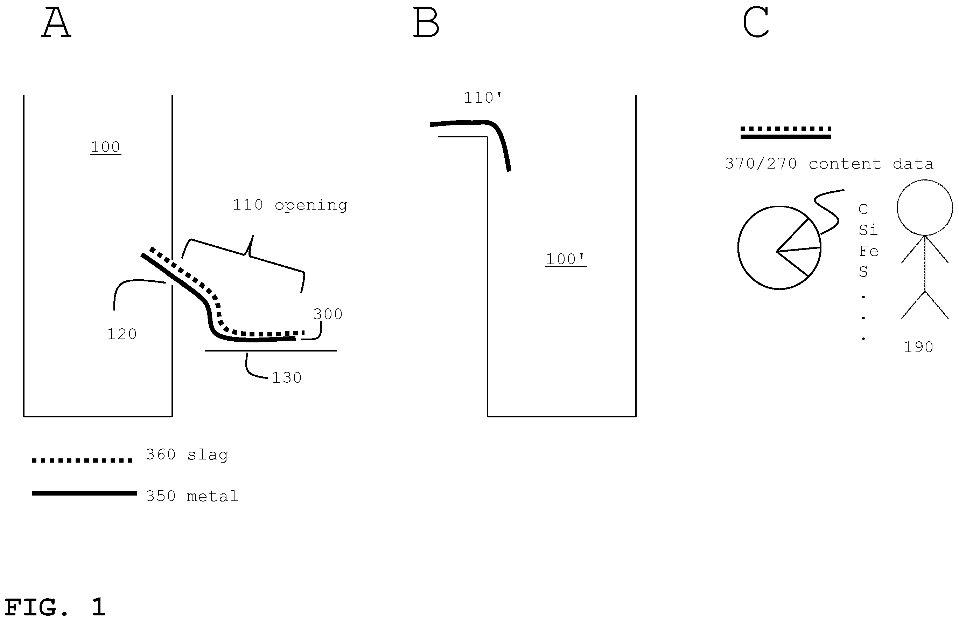

FIG. 1 illustrates metallurgical vessel 100 in much simplified - and almost symbolic - side views. FIG. 1 also illustrates vessel operator 190 (in short "operator") who uses content data 270/370 to control the operation of vessel 100. Vessel 100 is part of an industrial system, with sensors, actuators, computers, data communication devices and so on, and with many other components or equipment. For simplicity, such system details are omitted from illustration.

As illustrated on the left side by part A of the figure, vessel 100 has opening 110 to let molten material 300 leave vessel 100. Part B illustrates a minor variation with vessel 100' having an opening 110' to receive molten material 300.

Opening 110 can further be differentiated into hole 120 and conduct 130 (shown for part A only), and the flow of molten material 300 is illustrated from left to right.

Molten material 300 can further be differentiated into metal 350 and slag 360, shown by plain and dotted lines, respectively. This differentiation might be more relevant for vessel 100 in part A than for vessel 100 in part B.

The functionality of vessels 100' and 100 can be combined, for example, to a vessel for transporting material within a plant.

Operator 190 (of the vessel) needs to know the content of some chemical elements within material 300 (eventually differentiated by metal 350 and slag 360). Content is represented by content data 270/370 symbolized here by a pie chart (not scaled).

The figure uses reference 370 for content data obtained by rather traditional approaches (such as sample-taking with subsequent laboratory analysis) and uses reference 270 for content data obtained by a computer-implemented approach.

The content for the elements in metal 350 can be given in percentages, for elements such as for carbon C, silicon Si, iron Fe, and sulfur S and others. The content for slag 360 can be given for other chemical elements. Operator 190 uses content data 270/370 to control the operation of vessel 100 (for example, by changing supply material or the like, or changing other operation parameters).

Controlling is not limited to vessel 100, and content data 270/370 can be used to control other equipment that processes the material further. For example, molten material 300 from vessel 100 (e.g., iron from a blast furnace) usually goes to other vessels (e.g., vessel 100') that further process the material (for example, to produce steel in a steel plant).

In other words, content data 270/370 is relevant for controlling vessel 100 (that provides material 300), but it is also relevant for controlling further processing steps (by controlling further equipment, such as vessel 100').

In the following, the description explains the computer-implemented approach to estimate content data 270.

The description goes into details, by using the example of vessel 100 being a blast furnace. The skilled person is much familiar with such devices, and knows the various implementations of tap-holes (i.e., an example for hole 120) and runners (i.e., an example for conduct 130). Real-world furnaces may have more than one tap-hole, more than one runner, and so on. Further implementations usually comprise so-called skimmers (to separate metal 350 from slag 360). The tap-hole and the runner transport molten material 300 (i.e., metal 350/slag 360) away from the blast furnace during casting.

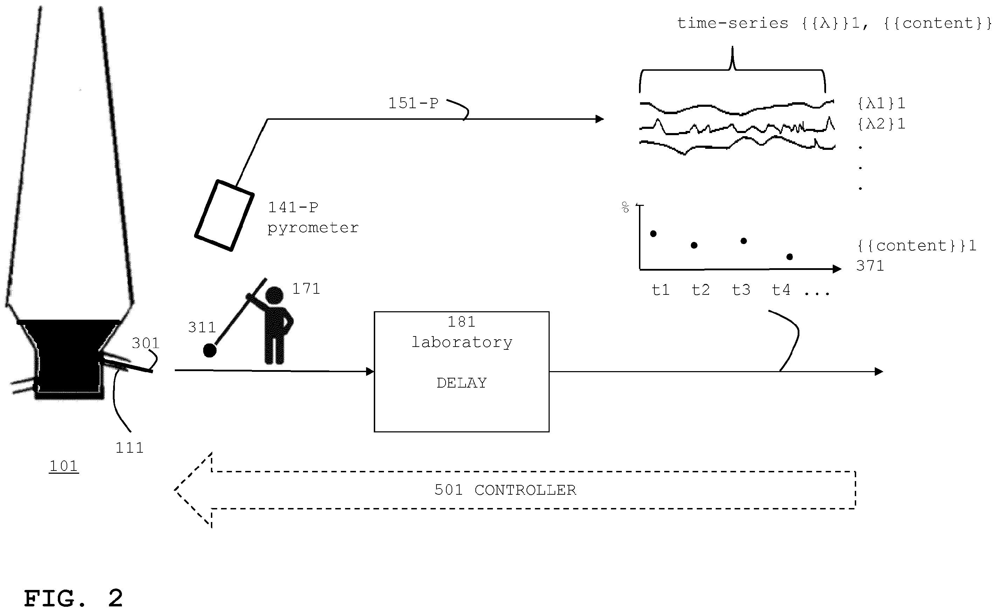

The approach - although computer-implemented - also uses data that is obtained by traditional tools (cf. FIG. 2) and uses a phase differentiation. The term "phase" is used here in the meaning of a "time interval".

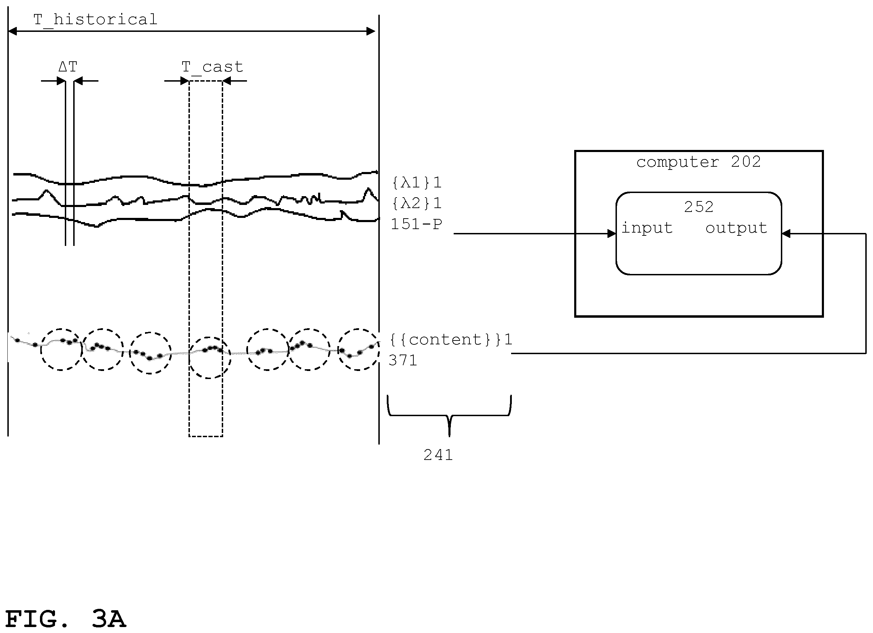

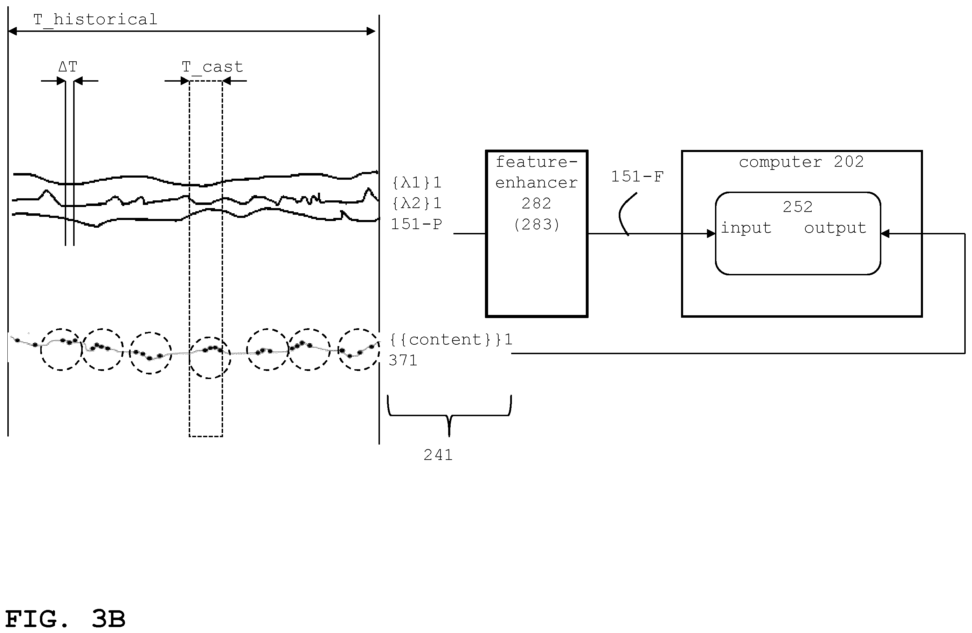

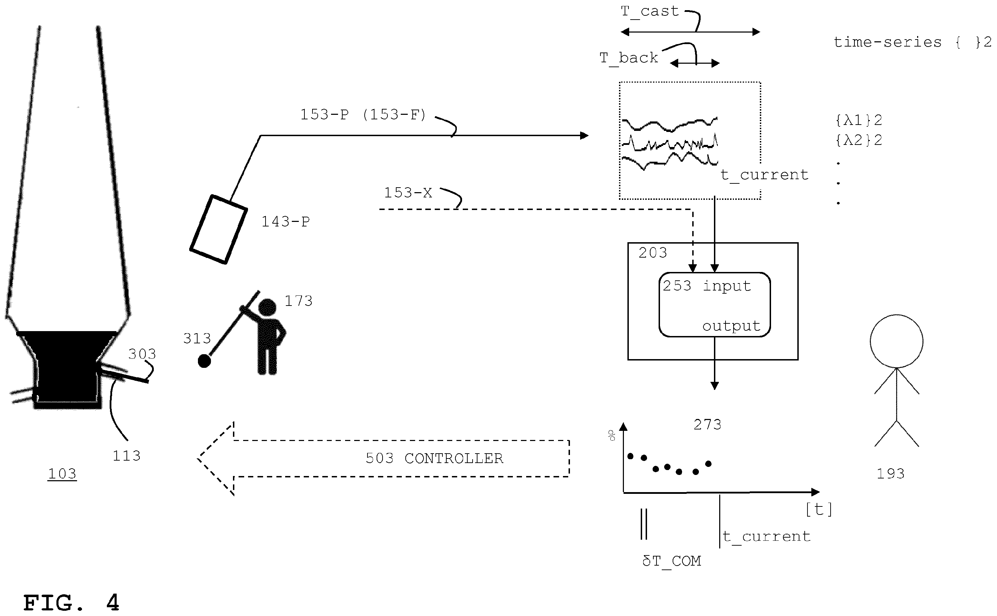

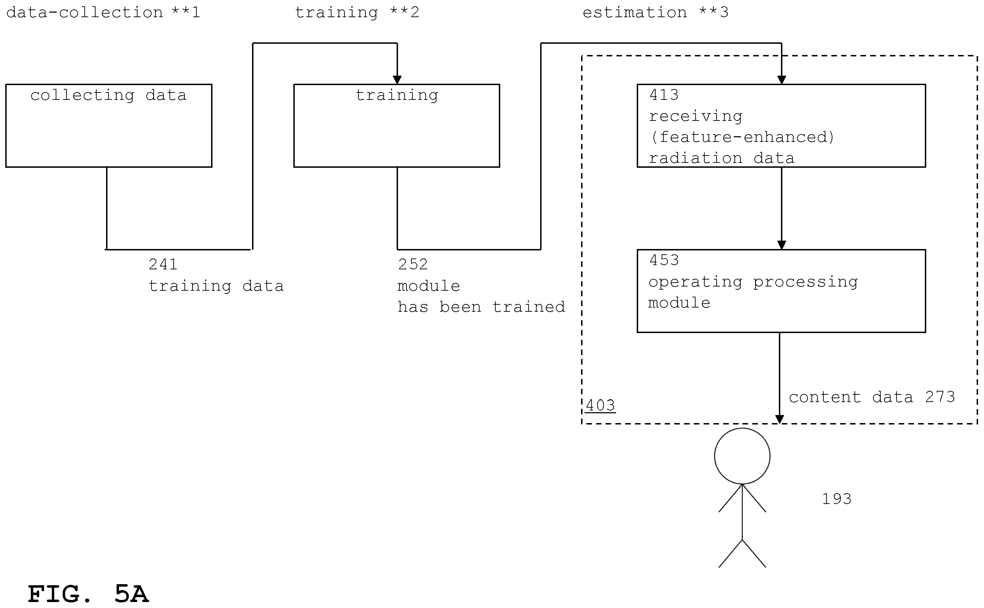

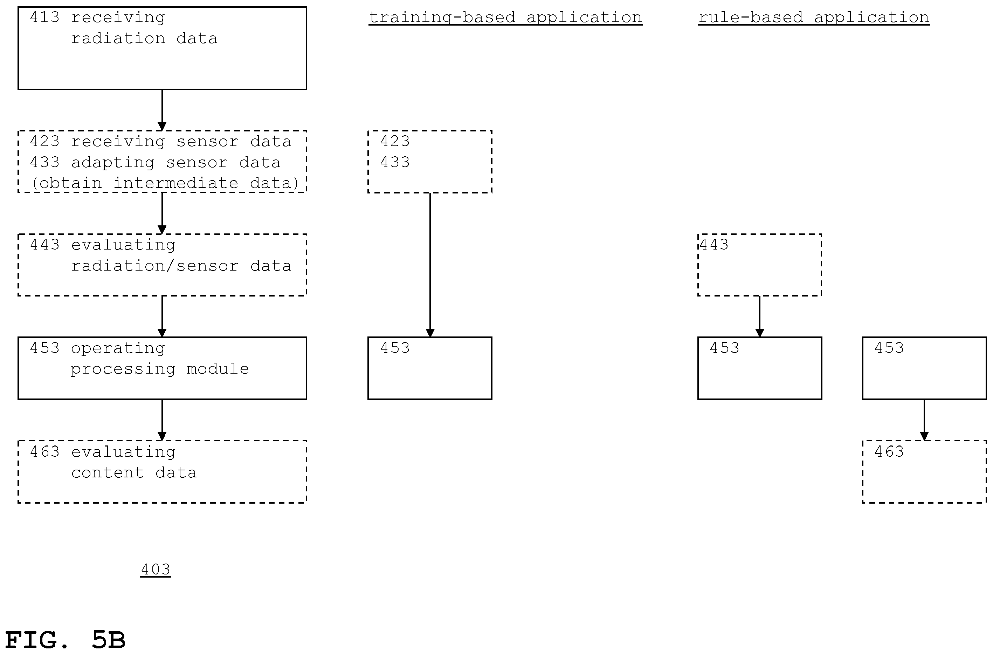

While FIG. 1 refers to items by calling them **0, other figures differentiate items according to the phases (cf. FIG. 5A for a further overview):
- In a data-collection phase **1, an industrial system (with vessel 101) collects data to be used for training, with details outlined in FIG. 2.
- In a training phase **2, a computer-implemented tool - illustrated as processing module 252 - is being trained, with details outlined in FIGS. 3A and 3B.
- In an estimation phase **3, the computer performs a method to estimate the content data, with details outlined in FIG. 4 (apparatus, computer 203) and FIGS. 5A and 5B (method 403).

In other words, throughout this description, references noted as **1/**2/**3 stand for items that are similar but that perform different functions in these phases. For example, vessel 100 in FIG. 1 may be physically the same vessel that is denoted by 101 or 103 in other figures. During all phases, the vessel may provide molten material, but in phase **3, the computer estimates the element content of the material.

Again, the focus of the description will be on the computer (and on the computer-implemented method) and it does not matter if vessel 100 is a blast furnace or other metallurgical vessel.

### Challenges

But in most scenarios, there are technical challenges, and the description only names some of them:
- Molten material 300 at vessel 100 can be dangerous for human operators 190. It has temperatures in the magnitude of 1.000 °C or more, it must not come into physical contact with operator 190 at any time. Protective clothing for the operator may fail. As opening 110 (especially the tap-hole) may open unexpectedly, humans should not stay in the vicinity, but they may need to take samples that are only available from the opening (cf. FIGS. 2 and 4, sample operator 171 and 173).
- Determining content data 370 usually involves sending material samples to laboratories (cf. FIG. 2), but the result with content data arrives with a waiting time. Such a delay makes controlling the vessel more difficult (cf. DELAY in laboratory 181 in FIG. 2).
- During a single casting process (that takes a couple of hours), taking samples is limited to one or two occasions, so that continuous monitoring is not possible. Continuous monitoring (cf. δT_COM in FIG. 4 being relatively shorter) is however preferred to control the operation of vessel 100 (and of other equipment) in real-time.
- Inspecting molten material 300 inside vessel 100 is complicated, for further reasons (e.g., the opening of the vessel is usually closed for most of the time, materials are available in different layers within the vessel, but the material composition at the opening matters).

### Solution overview

The operator keeps sending material samples to laboratories (i.e., the traditional way to measure the content), but the computer-implemented approach supports the operator by estimating the content. The computer uses data from sensors, not from physical samples. A pyrometer is an example for a sensor that provides such data. To keep the illustration as simple as possible, the description refers to the pyrometer (and to the data from the pyrometer) as a sensor that collectively stands for multiple sensors (of different types, and with different properties or items to measure).

The description distinguishes measurement data (i.e., data from sensors) as "radiation data" when the sensor is the pyrometer, and as "sensor data" when the sensor is not the pyrometer.

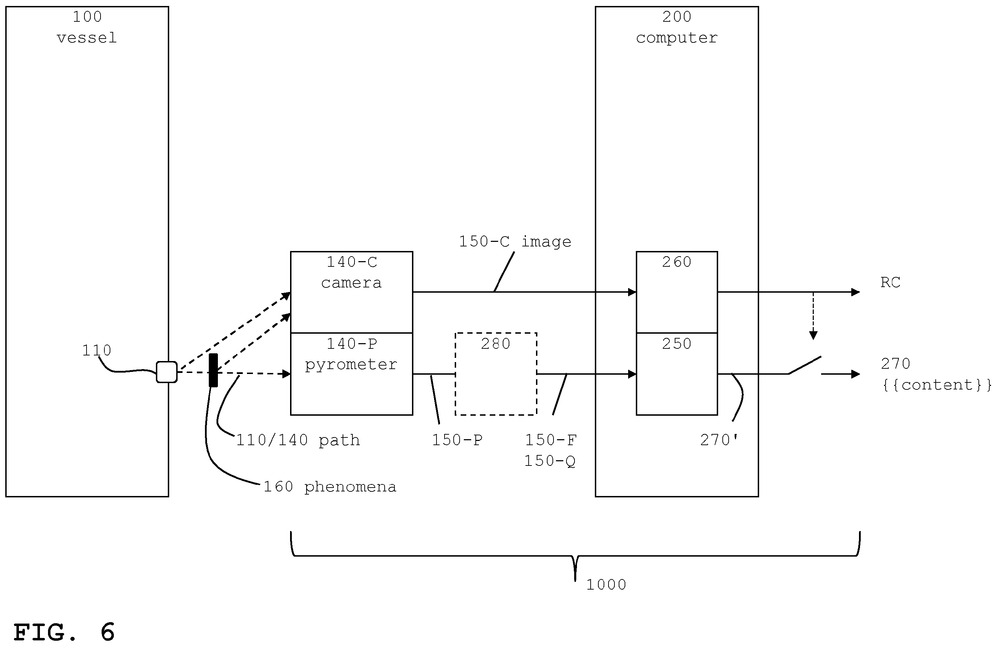

Such "non-pyrometer" sensors will be explained and discussed below (FIGS. 6-9), with a camera being a *pars pro toto* example. In general, description and drawings use reference 140 for sensors, and use reference 150 for measurement data (from sensors).

References 140/150 may use acronyms such as "P" (for "pyrometer") or "C" (for "camera").

Occasionally, the references differentiate the phases.

FIG. 2 illustrates blast furnace 101 (i.e., being the example for a vessel) equipped with pyrometer 141-P, during the data-collection phase **1. Simplified, the pyrometer measures infrared radiation (IR) at one or more wavelengths λ that pass through an optical system. The term "one wavelength" is understood as the range between a minimal and a maximal wavelength (i.e., bandwidth). An equivalent term to "wavelength" would be the radiation frequency (i.e., calculated with using the reciprocal value).

Pyrometer 141-P is arranged to monitor opening 111 and pyrometer 141-P provides radiation data 151-P. Radiation can be measured as "spectral energy density", and the skilled person is familiar with the underlying principles: much simplified, light emission from a body depends on the temperature of this body. The emissivity is a function of the body's temperature and of its elemental composition, and the emissions can be described by formulas that have the so-called Planck's constant in its components.

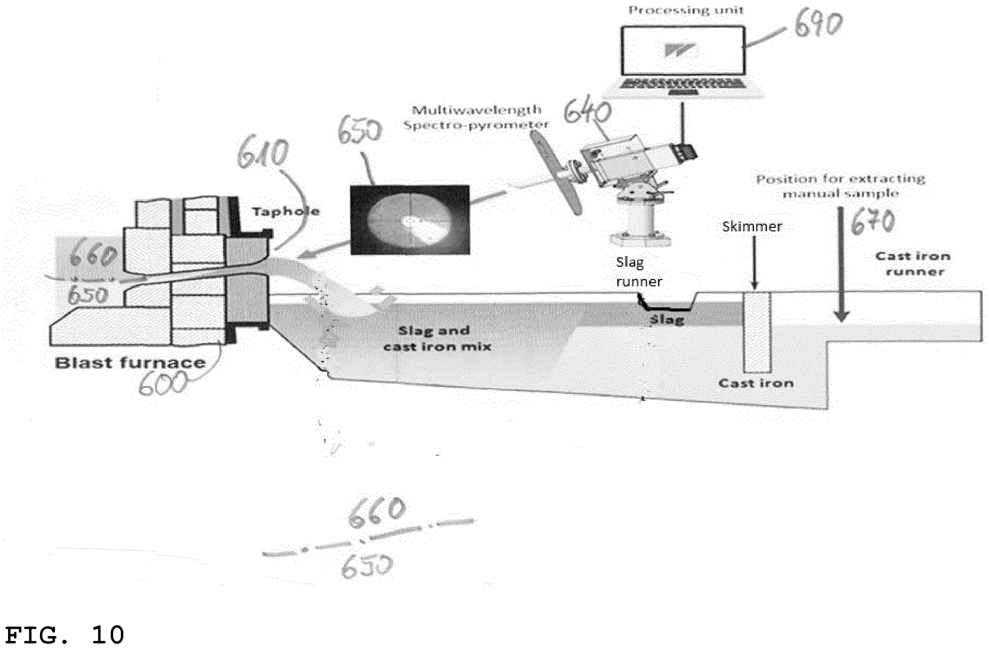

Depending on the implementation, pyrometer 141-P is located within a monitoring distance from opening 111, usually a couple of meters. A minimal monitoring distance avoids heat damage to the pyrometer. A suitable monitoring distance allows the measurement of the radiation while limiting the external impacts to the measurement. With increasing distance, the perturbations to the measurement increase as well. The pyrometer can be mounted on a holder so that its relative position (to the vessel) substantially remains unchanged (FIG. 10 illustrates a pyrometer on a holder support or carriage). The support allows adjustments so that the pyrometer catches the radiation from the opening.

Radiation data 151-P represent the thermal radiation that molten material 301 emits at opening 111. As the emissions that lead to radiation depend on the wave-length, pyrometer 141-P makes radiation data 151-P available for at least two wavelengths. Pyrometer 141-P is therefore a multi-wave pyrometer. The data are available in computer-readable format for processing by the computer, and the data represent, for example, the radiation intensity at particular wavelengths (such as λ1 and λ2).

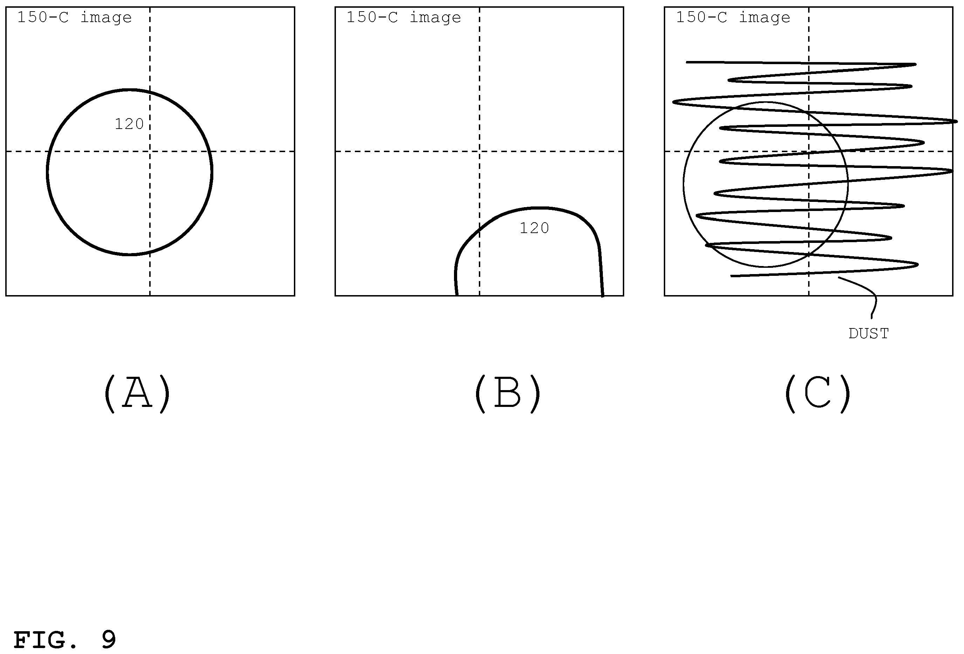

The skilled person who is familiar with pyrometers would also call opening 111 a "target", because pyrometer 141-P with its main field of view is directed to opening 111. An optional approach to adjust pyrometer 141-P to opening 111 (to let the pyrometer receive radiation from the opening as a whole, and to keep the relative position constant) is explained in connection with FIG. 9.

Radiation data 151-P (for example, λ1 and λ2) that become available over time would be available in the computer-readable format as a multi-variate time-series {{λ}}1, with single-variate times-series {λ1}1 and {λ2}1, or {λi}1 with index i = 1 to N in other notation. The numeral "1" at the right stands for the data-collection phase **1.

The number of wave-lengths (i.e., "first and second") does not have to be N = 2, FIG. 2 illustrates {{λ}}1 with N = 3 lines (i.e., 3 signals or "channels"). It is contemplated to use state-of-the art pyrometers with N = 5 channels (i.e., λ1 to λ5).

Pyrometer 141-P would provide data values for λi at sampling intervals (such as ΔT) that are usually equidistant. For convenience of illustration, ΔT of one second can be assumed. This is by way of example only, shorter ΔT such as 125 milli seconds are also contemplated.

### Pyrometer in general

Pyrometers are commercially available usually for applications to measure temperatures remotely. For example, a provider is Paul Wurth S.A., 32, rue d'Alsace, L-1122 Luxembourg, LUXEMBOURG.

In the context of blast furnaces, US 4,619,533 explains a pyrometer that measures the bath temperature of the furnace through a tuyere.

It is noted that - for the present approach to estimate content - calculating the temperature is not required. Nevertheless, the pyrometer (or better: the electronics in the pyrometer) provide temperature data and the temperature is given to the operators (usually in large displays). The skilled person can intercept the radiation data 151-P (cf. 153-P in FIG. 4) directly from the optical sensors of the pyrometer.

### Physical samples

FIG. 2 further illustrates sample operator 171 taking physical samples 311 (of material 301 that is available at opening 111).

Description and drawings do not go into much details here, because sample-taking is known in the art. The skilled person would further differentiate metal samples (taken from molten metal) and slag samples (taken from slag). Sample operator 171 would take the samples from a runner that carries to material (cf. 130 in FIG. 1) but not directly from the tap-hole (from 110 in FIG. 1), or would take the sample after the skimmer (that separates metal from slag). An implementation is illustrated with FIG. 10.

Sending samples to a laboratory (here laboratory 181) is known. The laboratory delivers content data 371 as a measurement result, again illustrated in time-series. As the time between consecutive sample-takings is relatively long (i.e., in the magnitude of hours) compared to ΔT for λi (at the pyrometer), the figure symbolizes content data 371 by dots (but not by lines).

Laboratory 181 would usually provide content data 371 separately for different chemical elements - not for all 100+ chemical elements - but for elements that are expected to occur in the molten material, for example for Fe, C, S, Si, Ti, Mn, P, Cu, Cr etc. The figure illustrates multi-variate time-series {{content}}, with single-variate time-series (the variates correspond to the elements).

To stay with the blast furnace example, a single casting process has an average duration of approximately three hours, but the content of the chemical elements may vary during casting. Although laboratories can provide content data 371 at a relatively high accuracy (i.e., with relatively narrow tolerance bands), data from the laboratory may no longer correspond to reality when data arrives from the laboratory. There is a DELAY from taking the physical samples (by operator 171 at t1, t2 etc.) to have the results as content data 371.

By way of example, a multi-variate time-series with content data 371 would be available as 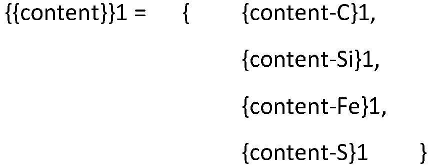 with the numeral "1" again standing for the data-collection phase. The acronyms are the element symbols for carbon, silicon, iron, and sulfur, respectively. The figure illustrates {{content}}1, with time points (i.e., the time point when sample 311 was taken).

Differentiating metal and slag is convenient. In that case, there would be a first multi-variate time-series {{content}}1 for the metal and a second multi-variate time-series for the slag. The slag may be differentiated otherwise, for other elements.

The figure illustrates content data 371 by percentages (weight wt %, mass, or volume as selected by the skilled person), for separate sample-taking time-points t1, t2, etc. These time points indicate the time when the physical samples are taken, not the delayed availability of the result. For simplicity of illustration, the dots stand for the content value of one element only.

Although the description refers to multi-variate time-series {{content}}, limiting the analysis to a single element in a single-variate time-series is possible.

Time-series {{λ}}1 and {{content}}1 (at least for one single-variate for one chemical element) form a training data set to be used in the following training phase **2.

### Control loop

FIG. 2 also illustrates controller 501 as an optional arrangement that can use content data 371 as input to implement the above-mentioned control loop.

Controller 501 may use content data 371 to control the vessel and to control further equipment. However, the DELAY may contradict controlling efficiency. For example, by the time content data 371 becomes available (i.e., sample-taking time-point t1 or t2 plus DELAY), casting may have been finished already (the vessel would be empty) so that controlling the vessels may no longer be applicable. Only controlling further equipment would still be possible.

### Training the processing module

FIG. 3A illustrates computer 202 with processing module 252 during the training phase **2.

On the left side, the figure repeats {{λ}}1 (radiation data 151-P) in combination with {{content}}1 (content data 371 from the laboratory), from FIG. 2, but adds details. The combination of radiation data 151-P with content data 371 becomes training data 241.

As mentioned, ΔT is the sampling interval (for the radiation data). Content data {{content}}1 is presented by clusters (clustering according to proximity in time during casting, dashed circles), mainly for the following reasons:
- Opening 111 (of vessel 101) is not open all of the time, but open only temporality (for blast furnaces only during casting). Physical samples 311 are not taken at other times (because they are not available).
- During a single casting process, the number of sample takings is limited (to one or two, sometimes three samples per casting).
- The temporal distance (between t1 to t2, t2 to t3 and so on, or "δT_LAB", FIG. 2) is therefore not constant. The DELAY does not matter because t1, t2 etc. can easily be matched to time points for radiation data.

Radiation data can be provided irrespectively of the casting and would be available even if casting has not yet started or has been completed. Data that is not related to casting would be excluded from training data 241.

Nevertheless, content data {{content}}1 can be considered as ground truth for training. In other words, {{content}}1 can be reference data for training. Although processing module 252 is illustrated by a single line at the output, there would be several outputs, for example, separated by elements (cf. C, Si, Fe and so on).

Data is collected over the time interval called T_historical. Over time, this interval would become longer. It is convenient to assume that T_historical is larger than at least one year.

But it is understood that the interval T_historical would be split into shorter time frames so that training data 241 is provided to processing module 252 in multiple repetitions M. To stay with the example of blast furnaces, these shorter time frames "T_cast" can be related to individual casting processes. T_cast can begin when the drilling machine starts opening up the tap-hole, and T_cast can end when the furnace has become empty (in the sense that molten material stops flowing out from the furnace).

It is common that individual casts are consecutively numbered (by a "unique cast ID") and that further details are recorded, such as the identification of a particular tap-hole (for furnaces with multiple tap-holes), the volume of molten material obtained, the dimensions of the tap-hole (drilling lengths) and others.

The skilled person can review historical data, for example by comparing data from individual casts, and can disregard data from some casts, or can disregard data that is not related to a cast. For example, a confidence score can be assigned to particular casting. For example, a particular casting process for that - for whatever reasons - samples 311 (cf. FIG. 2) and therefor content data 371 are absent would be disregarded to serve as training data (or excluded from the training data set). In other words, some sections of T_historical are disregarded, so that T_cast * M < T_historical.

Applying the confidence score is just an example for disregarding data. Further below, the description will explain the concept of reliability classification RC (cf. FIG. 6 for an introduction) that can be applied as well.

Content data 371 can be regarded as "annotations" to radiation data 151-P, but supervision by human experts is not required. Content data 371 varies with each casting.

In a single training run, module 252 would therefore receive training data 241 in M data sets and would obtain the module-internal values accordingly. These values are different for different architectures, to be explained next.

### Training the processing module with feature-enhanced radiation data

FIG. 3B illustrates computer 202 with processing module 252 during the training phase **2, with additional feature enhancer module 282. In other words, FIG. 3B is a copy of FIG. 3A, showing the enhancer module as well.

As it is possible to enhance radiation data 151-P by features, according to a plurality of feature enhancement rules (cf. FIG. 7B for examples), feature enhancer module 282 (being part of computer 202, or being external to computer 202) can identify features. Radiation data 151-P becomes feature-enhanced radiation data 151-F. In other words, the combination of radiation data and feature data is called "feature-enhanced radiation data". Details will be explained below, with FIGS. 7A and 7B.

Feature-enhanced radiation data 151-F does not have to be "historical", because enhancing can be step that just precedes the training. Is is however possible to store feature-enhanced radiation data 151-F (and to use it when needed, for example, as training data).

By citing reference "283" in parenthesis , the figure indicates that the feature enhancer 282/283 can operate in phase **3 as well.

Using feature enhancer module 282 (also module 283) is optional, but feature-enhancing can increase the estimation accuracy (i.e., the estimate the content of chemical elements with higher resolution).

Implementations for the feature enhancement rules can comprise using software libraries, building the feature enhancer module by an autoencoder, and other implementations.

It is also possible to implement the module as a machine-learned module that is being trained to select the plurality of feature-enhancement rules from a supra-plurality of rules, autoencoding is an option as well. In other words, the enhancement rules could be obtained by training.

### Model architectures

Processing module 252 uses an underlying model. The model can be based on so-called "deep learning", and the skilled person is familiar with selecting the appropriate model. The following paper provides useful information: Amal Mahmud, Ammar Mohammed: "A Survey on Deep Learning for Time-Series Forecasting" January 2021, DOl:10.1007/978-3-030-59338-4_19, in the book "Machine Learning and Big Data Analytics Paradigms: Analysis, Applications and Challenges (pp. 365-392)".

The paper mentions architectures, such as Convolutional Neural Network (CNN), Recurrent Neural Network (RNN), Long Short-Term Memory (LSTM), Gated Recurrent Unit (GRU), Deep Autoencoders (AEs), Restricted Boltzmann Machines (RBM), and Deep Belief Networks (DBNs).

Due to the nature of the data being multi-variate time-series, RNN, LSTM, GRU or CNN applied to time series are particularly suitable architectures.

Optionally, Deep Autoencoders can be employed to identify features that can be used to train architectures that are explained in papers, such as by: Karl-Philipp Kortmann, Moritz Fehsenfeld, Mark Wielitzka, "Autoencoder-based Representation Learning from Heterogeneous Multivariate Time Series Data of Mechatronic Systems", arXiv:2104.02784.

Other conventional Machine Learning algorithms such as Neural Network, XGBoost, Random Forest, etc. are also appropriate to train the module where the amount and size of the historical data is limited for deep learning architectures.

Model architectures are conveniently explained with "input" and "output" (with data flow from left to right, as for example, Mahmoud et al in FIG. 1) for the estimation phase **3. Module 252 has its "input" and "output" as well. During training **2, radiation data 151-P is provided to the "input" and content data 371 is provided to the "output".

Training the processing module 252 separately for different chemical elements is possible.

FIG. 4 illustrates blast furnace 103, equipped with pyrometer 143-P, during the estimation phase **3.

The explanations with FIGS. 2-3 regarding the equipment (such as pyrometer 141-P in FIG. 2) and the time-series are applicable for the training phase and the estimation phase as well. In other words, and by way of example, pyrometer 143-P in FIG. 4 is arranged to monitor opening 113 and to provide radiation data 153-P (for at least two wave-lengths λ1 and λ2). The data are in correspondence to the thermal radiation from molten material 303 at opening 113 in at least two wavelengths, as explained in FIG. 2.

In performing a computer-implemented method, computer 203 operates (cf. step 453) processing module 253 that processes radiation data 153-P (at least data that is available before time point t_current, the current time point). Processing module 253 has a regression model to estimate the content of the particular chemical element (the architectures allow regression).

As already explained with FIG. 3, processing module 253 has been trained in advance. The time that the computer requires to perform the method is negligible short (compared to δT_COM, cf. FIG. 2 and also relatively short to ΔT), so that the computer can repeat the method over and over. As a consequence, with receiving updated radiation data, the computer can update the estimation.

Computer 203 provides content data 273, but there is no safety risk to the operator (provided that alternative approaches, such as the above-mentioned LIPS are not applied). Vessel operator 193 is not involved in providing content data 273. Sample operator 171 (that would take samples) does not participate in providing content data 273. (It is noted that every new sample taken and evaluated by the laboratory can potentially serve as training data, cf. FIGS. 3A and 3B).

Vessel 101/103 and pyrometer 141-P/143-P can even be physically the same ones.

FIG. 4 also illustrates - by dashed lines - that computer 203 can optionally receive sensor data 153-X, with details to be explained below with FIGS. 6-10. FIG. 4 also illustrates T_cast (explained above), and also introduces time interval T_back.

To keep the illustration simple, FIG. 4 omits feature enhancer module 283 (cf. FIG. 3B), as mentioned feature-enhancing can be used optionally to improve the accuracy. In such implementations, processing module 253 would receive feature-enhanced radiation data 153-F (in the figure in parenthesis) instead of data 153-P.

### Control loop

Optionally, controller 503 controls the operation of vessel 103. Simplified, controller 503 can process content data 273 to control signals for vessel 103 (i.e., the furnace) or for the industrial system. It does not matter if vessel operator 193 uses control signals to adjust the operation parameters, or if controller 503 acts on vessel 103 automatically. In any case, content data 273 can be regarded as data that describe the status of a technical system.

FIG. 4 symbolizes controller 503 and the control signals by an arrow drawn with dashed lines from the output of computer 203 to vessel 103. In other words, a control loop could be set up with pyrometer 143-P and computer 203. Content data 273 would serve as input data for the loop. Controller 503 would process content data 273 to control signals. Vessel 103 (and optionally other parts of the industrial system) would be the recipient of the control signals (to set operation parameters and the like for the industrial system).

As the skilled person can set up controller 503 accordingly, without further explanation herein, suitable controlling goals are therefore mentioned by example only:
- In a first example, the control loop aims at minimizing the energy consumption (of vessel 103, or of the industrial system as a whole).
- In a second example, the control loop aims at the vessel providing material with content that is optimized for follow-up activities (e.g., to provide pig iron with pre-defined percentages of element content so that the iron is optimized for being converted to steel in a subsequent process step).
- In a third example, the control loop aims at reducing the environmental impact of the industrial system, such as to reduce emissions of substances (such as CO₂) to the environment.

Implementing multiple control loops is possible, and content data 373 would serve as input data to multiple controllers.

### Discussion regarding the phases

FIGS. 2-4 illustrates equipment for separate phases, but the phases are only convenient conventions to describe actions to be performed in consecutive order.

Operating vessel 101 during the data-collection phase (cf. FIG. 2) is a condition for training processing module 252 in the training phase (cf. FIGS. 3A and 3B) with training data obtained in the data-collection phase.

Training the processing module 252 in the training phase is a condition for estimating the content (cf. FIG. 4, to provide content data 273).

However, in real-world scenarios, collecting data for training purposes (as in the data-collection phase) is possible more or less at any time. Even if processing module 253 (cf. FIG. 4) provides content data 273, taking samples manually (by sample operator 173) continues, to obtain further training data and to evaluate content data 273 (from module 253).

The operation of the vessel during the data-collection phase (as vessel 101, in the continuation of that phase) and during the estimation phase (as vessel 103) continues independently from the training (cf. FIGS. 3A and 3B).

Sample operator 173 is still active in taking samples 313, cf. FIG. 4. While time-series {{λ}}1 and {{content}}1 can be considered as "historical data", the continued operation of vessel 101/103 (even during the estimation phase **3) provides data that can be used for a dual purpose, to determine the content (cf. FIG. 2, content data 371 from the laboratory), and to provide further training data (cf. FIGS. 3A and 3B).

### Method

FIGS. 5A and 5B illustrate computer-implemented method 403 (dashed frame in FIG. 5A) to estimate the content of a particular chemical element in molten material (303 in FIG. 4) that is available at an opening of a metallurgical vessel (113, 103 cf. FIG. 4). In other words, method 403 is related to the estimation phase **3. Estimating content leads to content data 273 (cf. FIG. 4 as well).

For convenience, FIG. 5A places method 403 into the context of the other phases. The figure illustrates the phases in columns from left to right: data-collection phase **1 (leading to training data 241, FIGS. 3A and 3B), training phase **2 (leading to processing module 252 that has been trained, FIG. 3A and 3B as well), and estimation phase **3 (with method 403).

More in detail, computer-implemented method 403 comprises step 413 "receiving data" and step 453 "operating the processing module".

From pyrometer 143-P that is arranged to monitor opening 113, computer 203 receives (step 413) radiation data 153-P (i.e., optionally, as feature-enhanced radiation data 153-F) that represent the thermal radiation from material 303 at opening 113, for at least two wavelengths λ1, λ2.

Computer 203 operates (step 453) processing module 253 that processes radiation data 151-P. Processing module 253 has a regression model to estimate the content of the particular chemical element.

Although the description writes "element" in singular, the method can be performed for multiple elements as well (cf. the examples C, Si, Fe and S), such as separately for each element (serially or in parallel), or in combination.

Processing module 253 has been trained in advance, as explained already (cf. FIGS. 3A and 3B).

### Optional steps

FIG. 5B illustrates - by dashed boxes - that method 403 can optionally comprise further steps 423, 433, 443 and 463. The optional steps are introduced for the optional application of sensor data (details below for FIGS. 6-9). Applying the optional steps can be advantageous in view of timing and accuracy to be explained below.

The figure illustrates method 403 with the optional steps on the left side (in dashed boxes), but also illustrates the application of these steps in simplified step sequences on the right side.

From sensors that are arranged to monitor vessel 103 (and/or to monitor the industrial system), computer 203 optionally receives 423 sensor data (150-X in FIG. 7A, or {{X}} in other notation).

In the same dashed box, FIG. 5B also illustrates further optional step 433 "adapting sensor data". The computer can implement this adapting step by an auxiliary ML tool (cf. adapter 260 in FIG. 6 for an example), or otherwise. Adapting leads to intermediate data. An example will be explained for the adaptation of image data to identify phenomena and to derive classification data.

In the column "training-based application", FIG. 5B illustrates that - in case that sensor data (150-X) is received and (still optionally adapted) - step operating 453 the processing module can be performed by also processing the sensor data.

Further steps are step 443 "evaluating radiation data" (or "evaluating sensor data") and step 463 "evaluating content data". The evaluating steps 443 and 463 are optionally performed after the to-be-evaluated data becomes available. Simplified, the result of evaluation can allow using the sensor data in subsequent steps (such as processing 453) or to block sensor data, or the result of evaluation can "allow" or "block" content data.

In the column "rule-based application", FIG. 5B illustrates that - again in case that sensor data is received and still optionally adapted - step 443 can follow to evaluate sensor data. The description will explain an example below.

The same column "rule-based application" illustrates the further evaluation of content data in step 463, based on sensor data. An example for that application will be explained with FIG. 6 in that preliminary content data will be forwarded (allowed) or blocked.

### Timing and Accuracy

The computer could execute method 403 (FIG. 5A) in repetitions to estimate "new" content (i.e., to provide content data 273) with every method repetition. An illustration is available in the time-diagram for content data 273 in FIG. 4: every dot corresponds to a method execution. For convenience of explanation, it can further be assumed that content data 273 become available at time points that are substantially equidistant at output interval δT_COM ("COM" standing for "computer").

The method repetitions could be synchronized to data availability at the input (of computer 203, cf. FIG. 4). For example, as radiation data 153-P become available at every ΔT, the estimations for content data 273 can be available at interval δT_COM that is approximately the same as ΔT.

The skilled person would arrange the computer to have sufficient processor and memory performance so that the run-time of a single method execution can be neglected (in relation to interval δT_COM).

Simplified, both running a computer to execute the method or running a laboratory converts input information to output information, but the method does not virtualize the laboratory and uses data that is NOT derived from physical samples. Further, a "DELAY" for the method can be neglected.

In any case, interval δT_COM (i.e., in the magnitude of seconds) would be much shorter than interval δT_LAB for content data 371 from laboratory 181 (cf. FIG. 2, for example around 20 minutes).

In view of the above-introduced optional controller 503 (FIG. 4) that can implement a control loop, it may not be required to repeat method 403 at relatively high rates. As explained above, content data 273 can be used to control the operation of the vessel (and the operation of the industrial system to that the vessel belongs). It can be assumed that control signals that modify the operation of the vessel would be required at time intervals that are longer than δT_COM but shorter than δT_LAB.

But despite such an advantage in "speed", that means the availability of content data 273 at δT_COM < δT_LAB and the substantial lack of DELAY, at least the following accuracy aspects should be taken into account:
- tolerance band, and
- reliability (in other words, the question of data confidence).

Regarding the tolerance band, content data 273 can be given in percentages (or otherwise) and vessel operator 193 will see data with an understanding of tolerance bands. By way of a simplified example, {content-Si} could be a percentage between, 0.5 and 1.5 percent, and the tolerance band could be assumed to be plus/minus 0.2 percent (or 0.4 percent from lower to upper bounds).

Of course, a trained processing module 252/253 will not be more accurate than its laboratory master (i.e., training data 241 with content data 371 in FIGS. 3A and 3B are considered to be more accurate). The tolerance band may be broader (e.g., the mentioned 0.4 percent, in content data 273) than for laboratory measurements (e.g., 0.1 percent, in content data 371).

However, obtaining content data 273 in real-time scenarios (from the computer) with relatively lower accuracy (i.e., larger tolerance band) is potentially more suitable for controlling purposes than obtaining content data 373 with relatively high accuracy (but shorter tolerance band, from the laboratory).

Regarding reliability, the following is noted: Despite the relatively high output rate (δT_COM in FIG. 4 relatively shorter than δT_LAB in FIG. 2), radiation data 153-P may not be accurate all of the time.

The pyrometer may provide radiation data that is still within usual tolerances between minimal and maximal values (i.e., values for particular wavelengths) but that data may occasionally not correspond to radiation. As it will be explained, the computer can process sensor data (cf. 150-X in FIG. 7A) so that radiation data can be differentiated by a reliability classification, or RC in short (cf. FIG. 6). The RC can be a binary classification, for example, into "reliable" or "non-reliable", or can be a classification by degrees of reliability.

The description will explain an approach to obtain RC by processing images (i.e., further data are images).

### Overview to sensors and sensor data

Method 403 has been explained for processing radiation data 153-P (during training: data 151-P; also in the implementation as feature-enhanced radiation data 153-F), but industrial systems have many more sensors. Processing data from such sensors can increase the accuracy of content data 273. FIG. 5B has already introduced steps receiving sensor data 423, adapting sensor data 433 and their application (by processing in step 453, and by evaluating in steps 443, 463).

In the following, the description gives an overview to sensors (FIG. 6) and an overview to time-series (FIGS. 7A and 7B) for measurement data (i.e., data from the sensors). The description will then discuss the use of sensor data to evaluate content data 273 (cf. optional step 463 in FIG. 5B). The skilled person can take over the teaching in evaluating radiation/sensor data as well.

It is again noted that using sensor data is optional.

While the computer processes radiation data by the processing module (as described for step 453 in FIG. 5A), the computer can use sensor data in at least two applications:
- (Rule-based application) The computer can use sensor data (cf. 150-X in FIG. 7A) to evaluate content data 273, by applying pre-defined rules (cf. step 463). This scenario will be explained with phenomena and with the reliability classification RC (cf. FIG. 6).
- (Training based approach) The computer can use sensor data (cf. 150-X in FIG. 7A) in processing module 253, cf. step 453 in FIG. 5B. In that case, sensor data is treated like radiation data, and the above-explained data collection and training applies. In other words, sensor data can be used in parallel to radiation data (cf. FIG. 7A), or in combination with radiation data.

In both applications, sensor data can be used to narrow the tolerance band (of content data 273, because processing in step 453 uses more data), and to increase reliability of content data 273 (or at least provide a reliability classification, because of the additional evaluation).

The computer can use some sensor data in both applications. The description takes image data as an example for sensor data that is used in both the rule-based application and the training-based application (cf. FIG. 5B). In view of particular sensor data, the approaches are not excluding, they are rather complementing.

As the phase distinction does not matter, FIGS. 6-7 use the **0 notation. In other words, figures are applicable for phases **1 (collecting data) and **3 (estimating content).

### Auxiliary machine learning tools

So far, the description has explained processing module 252/253 (during training and estimation) as a machine learning tool, with details. In the training-based approach, historical sensor data would be part of training data 241 in FIGS. 3A and 3B.

But for adapting sensor data in step 433, further tools can be used, hereinafter also "auxiliary ML tools".

The conventional phase distinction **1, **2, **3 does not necessarily apply for these auxiliary tools. Some of these auxiliary tools use image processing, and they can be trained otherwise. Or, the auxiliary tools can use off-the-shelf models. For example, an auxiliary ML tool for image processing can be trained during phases that do not have to correspond to phase **2.

FIG. 6 illustrates vessel 100, pyrometer 140-P and camera 140-C providing data to computer 200 (from left to right). FIG. 6 shows the concept, and there could be more than one pyrometer or more than one camera. Camera 140-C providing images is just an example for dual-purpose images for
- monitoring phenomena to obtain the reliability classification RC (example, for rule-based application of sensor data to evaluate data, cf. steps 443, 463), and
- providing sensor data to be processed by module 253 (cf. optional step 423 in FIG. 5B, as an example for the training-based application of sensor data).

Computer 200 has processing module 250 to process radiation data 150-P (optionally, as feature-enhanced radiation data 150-F) to content data 270 (cf. module 252/253 as explained above, method 403 in FIG. 5A). The figure is phase-agnostic and therefore uses references in the style **0.

Vessel 100 has opening 110 (cf. FIG. 1) and - corresponding to FIGS. 2 and 4 - pyrometer 140-P is monitoring the radiation (dashed arrows). Camera 140-C takes images 150-C of opening 110 (or its surroundings) but disregards particular wavelengths. In other words, pyrometer 140-P is monochromatic and camera 140-C is polychromatic. Image taking generates sensor data, and the computer receives them in step 423 (cf. FIG. 5B).

Images 150-C show phenomena 160 that in some situations may cause the estimation according to method 403 (FIG. 5A) to be not reliable. Phenomena 160 are detected by adaptation (cf. step 433 in FIG. 5B). Simplified, the presence or absence (or a degree of) phenomena 160 is given in intermediate data.

By way of example, the following phenomena 160 are mentioned:
- There can be dust (or other particles) in the space (or path 110/140) between opening 110 and pyrometer 140-P. Such dust would attenuate radiation so that pyrometer 140-P might detect radiation with errors. Or even worse, pyrometer 140-P would output radiation data 150-P that computer 200 can not process (or would process to incorrect content data 270). Such a scenario would be expected especially during casting (the hot material would simply interact with the air). In metallurgical industry, dust or other particles may be referred to as "accretion" or "fume".
- Pyrometer 140-P may not be aligned to opening 110, it may potentially look at the opening only partially. An ideally aligned pyrometer show receives radiation from the opening as a whole.
- Pyrometer 140-P may substantially look at slag but not at metal, but the content should be estimated for the metal, not for the slag.

Phenomena 160 should be understood in a more abstract sense, phenomena do not have to be located in the path.

If properly detected, such and other undesired effects of phenomena 160 can be considered and eventually mitigated. If dust or the like is detected, content data 270 can be disregarded, or if misalignment is detected, pyrometer 140-P would just to be re-adjusted. For detecting such phenomena 160, the skilled person can use adapter 260 that is implemented by an auxiliary ML tool.

But phenomena 160 may not be limited to dust and misalignment, phenomena 160 can comprises something else, that can be turned into data.

Method 403 (cf. FIG. 5B) can optionally comprise the following: In a receiving step, computer 200 receives one or more images 150-C that show opening 110 (or show path 110/140 between opening 110 and pyrometer 140-P). In a classifying step, computer 200 classifies the one or more images 150-C to identify phenomena 160. This classification can be implemented by adapter 260 implemented by an auxiliary ML tool. In a further classifying step, the computer can classify radiation data 150-P from pyrometer 140-P as (non-) reliable radiation data according to identified phenomena 160. In other words, adapter 260 provides the reliability classification RC. This classification in the adapter can also be implemented by the auxiliary ML tool.

FIG. 5B already shows the optional steps, more in general, with receiving 423, adapting 433 (to classify for phenomena) and evaluating 443 (here to evaluate the radiation data).

Again, the phase **1 or **3 does not matter. Reliability classification RC can be relevant in data-collection phase **1, and in estimation phase **3. For example, non-reliable data may not be suitable for training.

Although FIG. 6 illustrates RC and content data 270 as separate outputs from computer 200, the presentation of content data 270 to operator 193 (cf. FIG. 4 as content data 273) can be made conditionally, such as presenting content data for RC being "reliable" only. In other words, this is a just a further example for the optional evaluation in step 463 of FIG. 5B. Data evaluation steps may be related with each other, for example, evaluating radiation data as non-reliable (step 443) may also means that content data is evaluated as non-reliable as well (step 463, "switch open", no forwarding).

### Reliability

In other words, the reliability classification RC can be used as criterium to use content data 270 (for controlling or other purposes), or to disregard them (for example, for a binary RC being negative).

Depending on the RC, operator 193 can apply some corrective activities, among them the following: apply measures to remove the fumes from the path, realign the pyrometer, disregard content data for situations with a relatively high share of slag (e.g., more slag than metal at the tap-hole).

However, processing images to obtain the reliability classification RC is only one example for using sensor data (i.e., data that is not radiation data). The description now explains some approaches to use sensor data in the content estimation (training-based application, steps 423 and 453). In view of the above-introduced optional step 423 (cf. FIG. 5B), the sensor data (with or without adaptation) are being processed by module 253 (and the module has been trained with historical sensor data).

### System

FIG. 6 is also convenient to illustrate system 1000 for estimating the content of a particular chemical element in molten material (that is available at opening 110 of a metallurgical vessel 100). It is presented here in an embodiment with camera 140-C and classification module 260 that are optional components.

Pyrometer 140-P is adapted to monitor opening 110 and to provide radiation data 150-P. As already explained above, radiation data represent the thermal radiation from molten material at opening 110, for at least two wavelengths λ1, λ2.

Camera 140-C is adapted to monitor opening 110 (or to monitor path 110/140 between opening 110 and pyrometer 140-P, or to monitor both the opening and the path). Camera 140-C provides one or more images 150-C showing the opening (or the path, or both). In terms of FIG. 5B, computer 200 receives images 150-C as sensor data, step 423.

Computer 200 has estimation module 250 (i.e., processing module in the above explanation) and has image classification module 260 (implemented as an auxiliary ML tool). Estimation module 250 is adapted to process radiation data 150-P with a regression model to provide an estimation with preliminary content data 270' for the particular chemical element in the molten material. Estimation module 250 has been trained by training data collected during a data-collection phase **1, as explained with FIG. 3A: the collected data is a combination of historical radiation data, and historical content data obtained by measurements on samples taken from the molten material at the opening.

Image classification module 260 is adapted to classify one or more images 150-C to identify phenomena 160 at opening 110 (or at the path or both), and adapted to - subsequently - according to identified phenomena 160 provide reliability classification RC for the radiation data. Computer 200 outputs preliminary content data 270' as content data 270 only if the reliability classification RC complies with a pre-defined rule. FIG. 6 illustrates this conditionally data forwarding by a switch metaphor under control of RC. Rule-complying RC would make the switch conductive, otherwise the switch would be open (to block preliminary content data 270'). In terms of FIG. 5B, the computer adapts the images (step 433, classification as an example for adaptation) and applies the adaptation result to evaluate the content data (step 463).

Phenomena 160 have been explained already, it is noted that vessel 100 does not belong to system 1000.

Feature-enhancing can be used optionally, and FIG. 6 illustrates feature enhancer module 280 by a dashed box (enhancing radiation data 150-P to feature-enhanced radiation data 150-F, as the combination of 150-P and features 150-Q, cf. FIG. 7B).

### Radiation and other data

FIG. 7A illustrates time-series with radiation data 150-P (also noted as {λ1}, {λ2}, and so on) as well as with sensor data 150-X.

As mentioned above, the pyrometer is not necessarily the only sensor, and by way of example only, sensors can be one or more cameras (cf. FIG. 6 for a rule-based application to derive RC from the images), one or more microphones, sensors to measure viscosity of the material, the speed by that material moves in runners or the like, and sensors to measure particular gaseous substances in the vicinity of the opening.

Temperature data can be among the sensor data, and the primary purpose of a pyrometer to measure temperature is noted. Therefore, the pyrometer may also provide temperature data.

By way of example, {X1}, {X2} and {X3} are single-variate time-series standing for measurement data that is available by scalars. Two or more variates can be combined to vectors. For example, {{X1}, {X2}} would be a two-scalar vector.

By way of example, {X4} stands for data obtained from a microphone, the data can represent noise intensity (for example, as sound pressure level), sound frequency or other sound related observations (e.g., characteristic sounds that occur during casting).

By way of example, {X5} stands for data obtained from a camera (cf. camera 140-C in FIG. 6), such as images. As explained, images are prominent examples for being adapted to intermediate data (cf. step 433 in FIG. 5B), for example by classification.

Since the skilled person is familiar with installing sensors to industrial equipment, description and drawings focus on adapting data from sensors, but do not have to illustrate the sensors with much detail.

Using sensor data both during the training phase **2 and during the estimation phase **3 can increase the accuracy of the estimation (of the content).

Computer 200 (with processing module 252/253, 250 in FIG. 6) receives radiation data 150-P (i.e., {{λ}} with variates corresponding to different wavelengths, as already explained for method 403 (cf. FIG. 5A).

Receiving in step 423 (and processing) sensor data 150-X (or {{X}} here illustrated from {X1} to {X5}) can increase the accuracy of content data 273 (such as by making the tolerance bands more narrow).

From a different perspective, the computer processes radiation data 150-P (from the pyrometer, in step 453), but in a context, such as, for example,
- the (non) availability of data that may be indicative of content, cf. the evaluation of radiation or sensor data (step 443) that may block the data from processing,
- the presence of phenomena that may disturb the operation of the pyrometer (cf. FIGS. 6 and 9, phenomena 160, such as dust, or misalignment), wherein phenomena data can be input to processing module 253 or can be used for evaluation as explained by the image example in FIG. 6, and
- the possibility to detect contradictions (the opening is closed, while the computer receives data from the pyrometer).

Sensor data 150-X do not have to be obtained from sensors directly, but can be obtained be adapting.

It is also possible to take the RC as further input data. In such case, the RC would not be applied for evaluation only (cf. steps 443, 463) but also be processed in step 453.

### Feature-enhanced radiation data

In FIG. 7A, a dashed box points to feature-enhanced radiation data 150-F, used in an optional implementation, but to keep the description simple, it will be explained below, mainly with FIG. 7B.

### Images

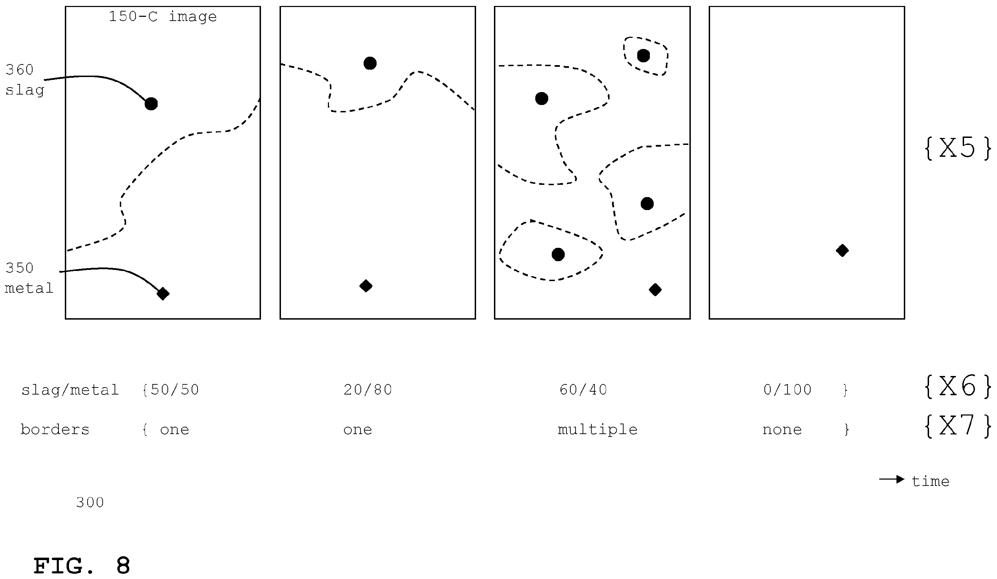

FIGS. 8-9 illustrate images 150-C from camera 140-C. Images processing can be applied (by processing module 252/253) or by an auxiliary ML tool (such as adapter 260 in FIG. 6). The result of image processing can be used as sensor data (cf. FIG. 7A), as reliability differentiator (cf. FIGS. 6 and 9, evaluation), as control signal to the pyrometer (cf. FIG. 8 for the metal/slag share, cf. FIG. 9 to control the alignment), or otherwise.

As camera 140-C is directed to opening 110 (i.e., to the tap-hole, the runner etc. for the blast furnace example, cf. FIG. 1 as well), images 150-C show - at least in many situations - opening 110 as well as the path between opening and camera.

Image processing may be advantageous for a further reason: An image (received for one ΔT) usually comprises pixels counted by millions, but radiation data from the pyrometer would comprise a couple of scalar values for each wavelength (e.g., two values, for λ1, λ2, optionally for further lengths, such as λ3, λ4, λ5 etc., but not for millions. Sensor data (cf. FIG. 7A) is relatively sparse, too. As a consequence there would be an imbalance in the availability of data amounts. Image processing can reduce (i.e., by adaptation, step 433) the dimensionality: a million-pixel image turns into a "short" data vector but the information that contributes to estimating the element content. (In metaphorical terms, image data is adapted to play in the same league as pyrometer data).

### Metal and slag share

FIG. 8 illustrates images from the camera, wherein metal and slag are differentiated by classification, again with an auxiliary ML tool that has been trained accordingly. Training does not necessarily have to be performed for particular vessel 100, but for potentially for any images that show metal and slag, usually supervised training.

FIG. 8 shows images 150-C in a series taken at consecutive points in time, similar as {X5} in FIG. 7A. The figure illustrates that the auxiliary ML tool differentiates material 300 into metal 350 (black diamond symbols) and slag 360 (black circles). Image processing allows to differentiate image areas (or areas of interest, cf. the dashed lines). Image processing converts image data into intermediate data.

Such differentiation for single images separately can be the basis for a classification (example of the adaption in step 433), such as explained for the following examples:
- Images can be classified according to percentage or shares, by that slag and metal are represented. The figure illustrates slag/metal share 50/50, 20/80, 60/40 and 0/100 in percent.
- Images can be classified according to the presence or absence of "borders" between slag and metal. From left to right, there are single borders between slag and metal (such as "one", and "one" in terms of data), multiple borders, or not borders at all (in the example metal only). The information regarding the quantity of the borders is intermediate data {X7}. It can be processed by processing module 250 (in step 453).
- Image sequences can be classified by changes, for example, by changes in the slag/metal share. The metal share increases from the first to the second image (from 50 to 80), the metal share decreases from the second to the third image (from 80 to 40) and again increases to the fourth image. In other words, intermediate data can be obtained by an operation similar to the mathematical deviation (here explained for the example of the share).
- Image sequences can be classified otherwise. For example, the computer can detect that the number of areas changes. The first and second image have two areas (one for slag, the other for metal), but the third image has multiple slag areas, and in the fourth image the slag has disappeared. The changes in the area can be coded in intermediate data as well.

Classifying the images is an example for adapting data in optional step 433 (of method 403, FIG. 5B). Depending on the application,
- (training-based application) intermediate data {X6}, {X7} etc. can then be processed by processing module 250 (step 453, in parallel to radiation data, in combination with radiation data),
- (rule-based application) intermediate data can then be used for evaluation (e.g., a rule would give a threshold condition for the slag/metal share).

The skilled person can use further image processing techniques, such as to obtain histograms (color distribution) or the like. The color distribution can even be changed by filtering out certain colors. Again, image classification is just an example for the adaption in step 433.

Image classification can also be part of determining the reliability classification RC. In case of RC, the computer would apply a rule (to evaluate). For example, a rule can turn RC "negative" in the sense that preliminary content data does not become content data (cf. FIG. 6 with references 270' and 270). Just to give an example, for a slag/metal share that is classified with 90 percent slag (or more), there would be no estimation of element content in metal possible.

### Further phenomena

FIG. 9 illustrates image 150-C in different variants, with further phenomena.

It can be assumed that pyrometer 140-P and camera 140-C can be co-adjusted so that any relocation of the pyrometer relative to the opening is also a relocation of the camera. In that case, the image also shows the view field of the pyrometer (the skilled person can consider a parallax if any). To symbolize adjustment, the figures show image 150-C with a cross-hair (dashed lines).

In the example, pyrometer 140-P should be directed to tap-hole 120 (by way of example, but it could be directed to the runner or to other parts as well).

In case (A), image processing (by an auxiliary ML tool) would result in category "OPTIMAL FIT", in case (B) in category "OFF", and in case (C), the result would be "DUST" (symbolized by the S-shaped lines, obscuring the tap-hole). In cases (B) and (C), the tap-hole would not be visible (to the pyrometer) so that measurement results are not reliable (RC "negative").

Again, auxiliary ML tools can be used here as well, it does not matter where they have been trained. In theory the detection of misalignment of an object in the images (i.e., a particular classification) can be trained by using "synthetic" images or by taken images from mock-up installations.

It is possible to raise appropriate alerts to the operator, such as in (B) to re-adjust the pyrometer (the circle would move to the cross-hair), or in (C) to wait until the dust has disappeared. Such results can be used as a control signal to processing module 252/253: no training would be allowed with data in such cases, to process content-values, etc.

Shortly returning to FIGS. 7-8, misalignment detection could lead to further data to be processed by the computer (for example as binary data OPTIMAL FIT / OFF). Module 252/253 would eventually learn that data from misaligned pyrometers might have to be ignored, but raising an alert (that lead to re-adjustment) would be suitable.

Automatically aligning the pyrometer based on image detection is noted.

In case that the pyrometer and the camera would not be co-adjusted (because they might be supported independently), an OPTIMAL FIT might be "false positive" and an OFF might be a false negative, but the skilled person can take such situations into account.

### Radiation

As mentioned above, pyrometers measure infrared radiation (IR) at one or more wavelengths that pass through their optical systems. Typically, IR has wavelengths from 700 nanometer (nm) to one millimeter (mm), but it is contemplated to leave the IR range.

One criterion for selecting the appropriate wavelength is the above-mentioned emissivity of the surface of a material (i.e., material 300) is its effectiveness in emitting energy as thermal radiation.

Therefore, it appears reasonable to use longer wavelengths (that go beyond one millimeter), or shorter wavelengths (that would be visible light).

It is noted that using images (such as images 150-C from camera 140-C, FIG. 6) implies that the computer (202, 203 in FIGS. 3-4) processes data that is related to radiation by visible light.

### Autoencoder

As explained, step adapting sensor data (433 in FIG. 5B), can be performed by an auxiliary ML tool.

A further example for the implementation of such a tool are autoencoders. The use of autoencoders may be advantageous because the efforts for human experts to annotate relevant features can be reduced. Autoencoders are discussed in papers, such as by the above-identified paper by Kortmann et al.

### Example

FIG. 10 illustrates an overview to a blast furnace 600 for that computer 690 estimates the content of particular chemical elements. The computer thereby can use image data, for the following functions (alternatively or combined):
- As explained above with FIG. 7A and for system 1000, computer 690 may use image data to obtain and apply RC.
- As explained above with FIG. 5B, optional steps 423 and 433, computer 690 may use image data to provide intermediate data for processing (step 453). For example, intermediate data could indicate the slag/metal share.

On the left side, the figure shows blast furnace 600 having tap-hole 610 (being an example of a metallurgical vessel with an opening) during casting. Material flow is illustrated from left to right, from the furnace to several runners. Molten material (slag 660 and iron 650) moves from the furnace through the tap-hole to the runners. As illustrated in the center of the figure, slag and cast iron are mixed in a initial runner but soon separated (by a skimmer) into slag and cast iron (to flow in separate runners). The figure also illustrates (by a vertical arrow 670) that manually taking samples (cf. by operator 371 in FIG. 2) is performed at the cast iron runner.

Similar illustrations with a furnace, a tap-hole, runner and skimmer can be found in text-books, but FIG. 10 adds pyrometer 640 (cf. pyrometer 151/153 and processing unit 690, cf. computer 200 that executes method 403). The camera can be mounted together with the pyrometer on the same support. Image 650 is symbolized at the top of an arrow pointing from the pyrometer to the tap-hole. In other words - provided that the pyrometer is properly aligned to the tap-hole - the image shows slag and iron at varying shares. Also the image may show phenomena, such as dust. Adapting images to intermediate data, and applying the intermediate data for purposes such as evaluating has been explained in detail above.

As the radiation forwards the relatively high temperature from the tap-hole to its vicinity, pyrometer 640, and - optionally - the camera and other sensors are adapted to operate under such conditions. The skilled person can provide cooling to the electronics, for example, by water cooling, or can provide appropriate shielding. FIG. 10 symbolizes such protective measures by a protective shield that is mounted at the left side of the pyrometer/camera.

### Time-series

The description occasionally refers to multi-variate time-series that represent pluralities of measurement data. An example is illustrated in FIG. 7A. In general, {{X}} stands for a multi-variate time-series, with i = 1 to N variates {Xi}. Index i is the variate index, and N is the variate number. {{X}} comprises a plurality of single-variate time-series. The variates {Xi} are given in single-variate time-series. In alternative notation, the single-variate time-series can be given as a sequence of data samples.

M is the number of samples in an observation interval WINDOW (i.e., the temporal length of the time-series), and individual samples are identified by index m. The sampling interval has a duration of WINDOW = ΔT * M. ΔT stands for the sampling interval. ΔT can be the same for all i. This is convenient for illustration, but not required in reality. Different single-variate time-series can use different sampling intervals. For example, a temperature would be measured every minute, Δt = 60 seconds, but radiation would be measured every second, ΔT = 1 second (as explained).

At every time point tm, data can be available that represent values for each variate Xi. As the semantics do not matter, it is possible to normalize the values. For example, for a temperature range from 100 °C to 1.100 °C, normalized values could be processed as "0" and "1". The skilled person can apply pre-processing to filter out variate values that are not feasible. For example, a defective sensor may occasionally output an excess value that can be neglected.

Time points tm are given for the end of each sampling interval ΔT. This is just a convenient convention, in other words, tm identifies the sampling interval ΔT that ends at tm.

As the description differentiates between multi-variate and single-variate time-series by writing {{ }} or { }, the description has occasionally omitted "multi/single-variate" or places them in parenthesis, respectively.

### Radiation data that conveys further information

As mentioned above, emissivity is a function of the body's temperature and of its elemental composition. The radiation data from the pyrometer (cf. 151-P in FIG. 2, 153-P in FIG. 4 and 150-P in FIG. 6) is related to the emissivity, although emissivity does not have to be calculated.

As radiation data is specific to wavelengths, the data can be considered as a spectrum with N spectral lines (cf. N wavelengths, N frequencies). Radiation intensity varies over time and the computer therefore processes radiation data in multi-variate time-series {{λ}} (in phase **1 and in phase **3).

As radiation conveys energy, energy has two well-known aspects that are simplified here: First, radiation at shorter λ in principle conveys more energy than radiation at longer λ. Second, the value of the individual λ corresponds to the energy as well, and this energy can change over time, with lower values corresponding to lower energy and with higher values corresponding to higher energy.

The second aspect is illustrated in FIG. 2 for {λ1}, {λ2} etc. with values (at the ordinate) that change over time. Changes over time are conveniently discussed with curves, or with graphs, but it is noted that computers do not have to present such visualization to users.

FIG. 7B illustrates radiation date 153-P in two single-variate time series for (first and second) time-series {λ1}, {λ2} as well as illustrates feature data 153-Q, also as time-series. For convenience, the ΔT intervals apply for all data 153-P and 153-Q. The intervals are given as tm from t1 to t17.

The figure give some examples for feature-enhancing, according to the plurality of feature enhancement rules. The computer (cf. enhancer module 282/283 in FIG. 3B, module 280 in FIG. 6) applies the rules by processing radiation data 153-P. Rules (and their corresponding features) can be differentiated into rules by that the computer (i) processes one single-variate time-series or (ii) processes two or more single-variate time-series.

In the example, {λ1} has a values that rises and falls (the bold line), and that is sometimes higher, sometimes smaller than a reference value. The reference value could be a threshold value (here given by the horizonal line). It is also possible to normalize data to such or other threshold. For example, the reference could be an average so that the values are sometime above the average ("positive") or below ("negative"). {λ2} has a values that rises and falls as well, but with a different timing (in the example, the bold line is smoother).

By way of example, the computer applies a first rule, and the first feature should be the sign of the derivation. The rule can be implemented by comparing consecutive values: the derivation is positive if "value (tm+1) > value (tm)", or is negative if "value (tm+1) < value (tm)".

The computer can apply a second rule, and the second feature should be the identification of threshold crossing, here indicated for time intervals t4, t7, t13, 17 during that the value of {λ1} crosses the threshold (in either direction).

While the first and second features are derivable from {λ1} only (in case (i)), the third feature should be determined by processing both {λ1} and {λ2} (case (ii)). By applying the third rule, the feature enhancer would identify the third feature. In the example, the computer identifies time intervals in that the values of both {λ1} and {λ2} are rising, here at t1, t2, t5, t6, and from t14.

The mentioned first, second and third rules are just examples. Identifying features to data in time-series does not have to be explained with figures, the description continues by discussing features, without necessarily referring to figures.

It is possible to pre-process radiation data to identify features that are local characteristics, and that can be specific for individual wavelengths. In other words, the change of the lambda-values may follow a detectable pattern in the curvature. By way of example, such patterns can be, for an individual single-variate time-series {λi} the following:
- The values of a time-series may increase or may decrease over an interval of time-points (i.e., the first derivation), or may stay constant (first derivation at zero).
- A time-series my show a change in such increase or decrease (i.e., the second derivation).
- A time-series may have inflection points (that is just another way to look at the second derivation).
- Values can reach zero (and staying zero over a detectable number of time-points), the same applies for reaching thresholds.
- The values may reach a maximum value (or minimum), with or without considering absolute values, etc.

It is further possible to pre-process radiation data to identify features that are still local characteristics, but that can be specific for two or more individual wavelengths. To stay with the example, features can be detected as follows:

The value for a first wavelength λ1 increases, and simultaneously, the value for the second wavelength λ2 decreases (over vice versa), over an interval of time-points tm. In that sense, the first derivations for both values would have different signs (positive and negative, or vice versa).

For a pair of wavelengths, there could be second derivations with signs such as "++", "+-", "-+", "--".

The values may reach zero in particular order (e.g., λ1 first, λ2 second).

The values of λ1 and λ2 may reach maxima substantially at the same time, at different times, etc.

Such features can be detected by the computer (for example, by a feature detector, or feature enhancer), and detected features can be regarded as enhancement to radiation data. Feature-enhanced radiation data 150-F (cf. FIGS. 7A and 7B) can be processed (in all phases **1, **2, and **3) as if that would be radiation data. In other words, feature-enhanced radiation data 150-F (like radiation data 150-P) represents the thermal radiation from the molten material, but is represents the radiation at higher accuracy so that estimations (i.e., element content) can be derived with higher accuracy.

Therefore, the computer performs the method steps accordingly (cf. FIGS. 5A and 5B): in receiving step 413, the computer receives feature-enhanced radiation data. In operating step 453, the computer processes feature-enhanced radiation data. The same principle applies to training (cf. the discussion of FIG. 3B).

In general, feature-enhanced radiation data (150-F in FIG. 7A as well as the examples in FIG. 7B serve only as an example), is data that represents local characteristics for radiation data. Feature-enhanced radiation data is wavelength specific data (150-F is shown for λ2 only). The term "local" stands for time-intervals within time-series.

Further examples comprise the following:
- The value of a particular wavelength λi can have a local minimum or local maximum (in terms of "local" time-intervals). Feature-enhanced radiation data indicates the time-points of that min or max value.
- The value of a particular wavelength λi can oscillate, and the oscillation can be detected for certain time intervals. FIG. 7A illustrates 150-F for such a temporary oscillation of λ2. Feature-enhanced radiation data indicate the start and end time of the oscillation, optionally a class (relatively low or high oscillation etc.)
- As the value of a particular wavelength λi usually changes over time, it is possible to calculate the first order derivative (or even the second order derivative). For example, an increase of the value is a feature and it would correspond to a positive but more or less stable (first order) derivative. The computer can use that feature (i.e., the indication of the derivative) as processing input. Changes over time are also viewed as slopes (of curves or graphs), and the skilled person is familiar with classifying them (e.g., steep slopes).
- Changes over time do not have to be processed by the particular wavelength λi values, but it can be advantageous to apply local curve fitting techniques. Such a fitting curve may disregard outliers or the like. This is just another example in that feature enhancing may improve accuracy: The outliers are just ignored.
- While a first single-variate time-series changes over time in a particular pattern (such as by a steep slope), a second single-variate time-series may change in a similar pattern (such as by a steep slope as well), or may change in an opposite pattern (other slope direction). Such pattern similarity can be detected as a feature as well.
- Pattern similarity may involve a time-difference (in analogy to a phase shift between voltage and current in electro-techniques), and the time-difference may serve as a feature as well.
- As single-variate time-series (here: lambda) represent radiation energy, the ratio of the values between two time-series can be a feature as well (e.g., value at λ1(tm) / value at λ1 (tm), for equal tm).

### Time-windows and further statistics

The description has explained features by way of example, with temporal aspects in view of one or two (or even more) time-series, in view of comparing values and others. In general, feature identification can apply statistics. The following is therefore just an overview to further options:
- Features may develop over time. An example for such temporal evolution of features is a change over periods that are longer than ΔT.
- It is possible to apply moving temporal windows. Statistics can be computed from the distribution of values withing such windows (e.g., mean or average, median, standard deviation, quantiles, skewness, polynomial fit parameters, or any curve fitting).
- It is also possible to apply a moving window and to obtain a signal spectrum. By way of example, the following transformations can be applied: Fast Fourier Transformation (FFT) or wavelet transform.
- Applying moving windows has a further aspect in calculating signal auto correlation and calculating associated characteristics (for example, a time shift so that the autocorrelation is below a pre-defined threshold). As autocorrelation applies to a single time-series, correlations can be calculated for multiple time-series as well (cf. the FIG. 7B example for {λ1} and {λ2}.
- It is further possible to detect of time-series pattern using similarity metrics like Dynamic Time Wrapping, using pre-trained neural networks or rules (i.e., further auxiliary networks).
- Further, the correlation between of one radiation signal and another signal (for moving windows) can be recorded.
- Comparisons to particular historical data can be classified according to particular historical casts (such as "Golden Casts" with best performance, or even to casts with worse performance)
- To limit computation efforts (in terms of memory, CPU, bandwith and other resources), its is possible to apply feature identification by means of dimension reduction like principal component analysis, or autoencoder machine learning.

### Analogy

The skilled person can find some analogies to enhanced radiation data by talking to astronomers. Stars may change their color periodically, may change their brightness etc. Such and other changes my point to properties of the stars. But the analogy stops here because astronomers do not take physical samples (the moon and comet examples do not apply).

### Time-intervals for data

FIG. 4 illustrates time interval T_cast and as already explained, T_cast can begin when the drilling machine starts opening up the tap-hole. In other words, T_cast can mark the begin of each individual casting process. It is convenient for computer 203 to receive radiation data (step 413, FIGS. 5A, 5B and to process them in step 453) for data from the start of each cast. The same principle applies to training: the (optional) separation of historical data according to T_cast has already been explained as advantageous.

It is however not required to follow that approach. FIG. 4 illustrates time interval T_back from a time point when casting is already ongoing until t_current. T_back can therefore mark the temporal length of time-series to process. In many situations T_back would correspond to WINDOW (cf. FIG. 7A).

T_back (i.e., a value that represents its duration) can also be input to processing module 253 of computer 203. (The same principle applies to training as well). Although T_back does not come from a sensor, it can be treated like sensor data.

### Generic computer

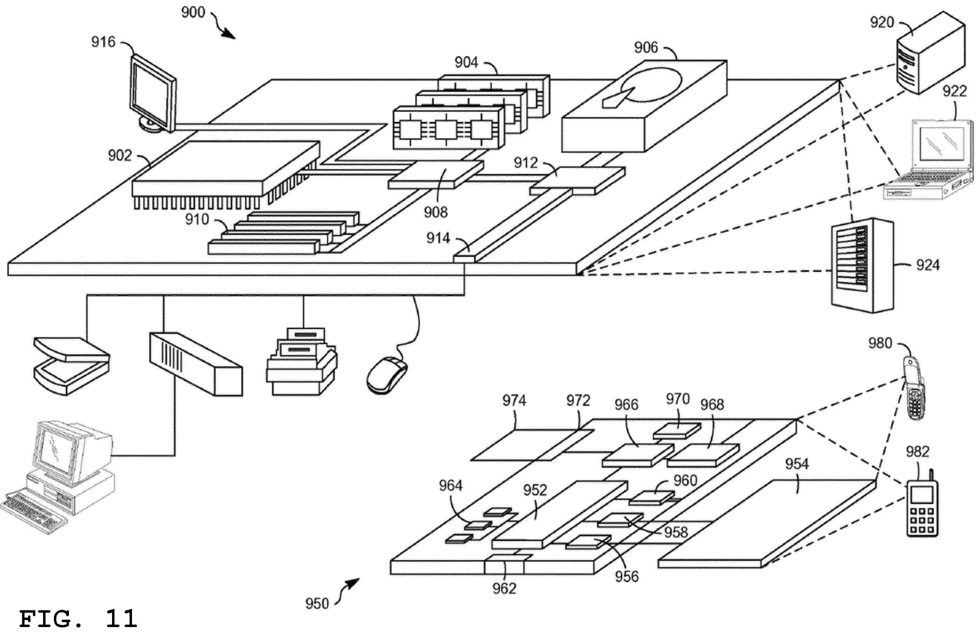

FIG. 11 illustrates an example of a generic computer device which may be used with the techniques described here. FIG. 11 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computers that have been illustrated by other figures. Computing device 950 is intended to represent various forms of mobile devices, such as personal digital assistants, cellular telephones, smart phones, driving assistance systems or board computers of vehicles and other similar computing devices. For example, computing device 950 may be used as a frontend by a user (e.g., an operator of a blast furnace) to interact with the computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the claims.

### Further summary

As explained in detail, the pyrometer is mechanically arranged at the vessel in a monitoring distance. The pyrometer monitors the opening, and the computer receives radiation data from the pyrometer. Radiation data represent the thermal radiation from the material at the opening, in at least two wavelengths. So far, the description has explained that the computer operates a processing module that processes the radiation data as feature-enhanced data. However, feature enhancing is not necessary in all cases. The description therefore closes with a summary of an approach that uses feature enhancing only optionally.

The computer operates a processing module that processes the radiation data. The processing module has a regression model to estimate the content of the particular chemical element (i.e., "content data"), and the processing module has been trained in advance.

The pyrometer can measure the radiation from the tap-hole of a blast furnace. To increase accuracy, further sensor data are processed optionally.

A computer-implemented method is provided to estimate the content of a particular chemical element in molten material (that is available at an opening of a metallurgical vessel). From a pyrometer that is arranged to monitor the opening, a computer receives radiation data that represent the thermal radiation from the molten material at the opening, for at least two wavelengths. The computer operates a processing module that processes the radiation data, wherein the processing module has a regression model to estimate the content of the particular chemical element, and wherein the processing module has been trained in advance.

Optionally, the step operating the processing module comprises to operate a module that has been trained using training data collected during a data collection phase. The collected training data are a combination of historical radiation data, and historical content data obtained by measurements on samples taken from the molten material at the opening.

Optionally, in a further receiving step, the computer receives sensor data from sensors that are arranged to monitor the vessel; and in the step operating the processing module, the computer processes the radiation data in combination with the sensor data.

Optionally, after receiving sensor data, the computer performs adapting the sensor data to obtain intermediate data. Thereby, the computer performs the step operating the processing module with the intermediate data.

Optionally, the computer performs adapting by an auxiliary machine learning tool. The tool can be an autoencoder.

Optionally, the computer performs further steps: from a camera, it receives one or more images showing the opening or showing the path between the opening and the pyrometer, it classifies the one or more images to identify phenomena. The phenomena selectively comprise at least one of the following: accretion, fumes or reflections, located in the path; degree of alignment of the pyrometer to the opening; and the share of metal and slag on the images. The computer classifies the radiation data from the pyrometer as reliable radiation data or non-reliable radiation data, according to the identified phenomena. In other words, reliability and non-reliability are quality categories and the computer differentiates these categories by processing the images. As mentioned, the computer processes the radiation data to estimate the content of the particular chemical element, but investigating reliability can be regarded as a "quality assurance measure" that eventually lets the computer disregard certain estimations automatically.

Optionally, the molten material is a composition that comprises molten metal or a metal alloy, and wherein the particular chemical element is selected from carbon, silicon, iron and sulphur.

Optionally, the method steps are applied for the metallurgical vessel being a blast furnace, for that the opening comprises a tap-hole and a runner to transport the material away from the blast furnace during casting.

Optionally, the method can be performed with feature-enhanced radiation data that is data that represent local characteristics for radiation data: the computer can receive feature-enhanced radiation data, and in the operating step, the computer can process feature-enhanced radiation data.

Optionally, the computer performs the further step of presenting the estimation with the content data to an operator of the blast furnace.

In repetitions, the method can be used to control the operation of the vessel.

A computer program product that, when loaded into a memory of a computer system and executed by at least one processor of the computer system, causes the computer system to perform the steps of the computer-implemented method.

A computer system comprises a plurality of modules which perform the steps of the computer-implemented method.

A system is provided for estimating the content of a particular chemical element in molten material that is available at an opening of a metallurgical vessel.

A pyrometer that is adapted to monitor the opening and to provide radiation data that represent the thermal radiation from the molten material at the opening, for at least two wavelengths. A camera is adapted to monitor the opening or the path between the opening and the pyrometer, to provide one or more images showing the opening or the path. A computer has an estimation module and an image classification module. The estimation module is adapted to process the radiation data with a regression model to provide an estimation with preliminary content data for the particular chemical element in the molten material. The estimation module has been trained by training data collected during a data collection phase. The collected data is a combination of historical radiation data and historical content data (obtained by measurements on samples taken from the molten material at the opening). The image classification module is adapted to classify the one or more images to identify phenomena at the opening or at the path, and to subsequently - according to the identified phenomena - provide a reliability classification RC for the radiation data, so that the computer outputs preliminary content data as content data only if the reliability classification RC complies with a pre-defined rule.

Optionally, the phenomena selectively comprise at least one of the following: accretion, fumes or reflections, located in the path; a degree of alignment of the pyrometer to the opening, and the share of metal and slag on the images.

### References

The following overview takes the phases into account, and cites reference for that items are illustrated.

- 100/101/103: metallurgical vessel
- 110/111/113: opening
- 120: hole, or the hole on an image
- 130: conduct
- 141-P/143-P: pyrometer
- 140-C: camera
- 150-P/151-P/153-P: radiation data
- 150-X: sensor data
- 150-C: images (example for sensor data)
- 150-F: feature-enhanced radiation data
- 150-Q, 153-Q: feature data
- 160: phenomena
- 171/173: sample operator
- 181: laboratory
- 190/193: vessel operator
- 200/202/203: computer
- 241: training data
- 252/253: processing module
- 260: adapter
- 270, 273: content data, estimated by the computer
- 270': preliminary content data
- 280/282/283: feature enhancer module
- 300/301/303: molten material
- 311/313: sample of molten material
- 350: metal
- 360: slag
- 370, 371: content data, measured by the laboratory
- 4xx: method, method steps
- 501, 503: controller
- 6xx: blast furnace, and system components in an example
- 9xx: generic computer and its components
- 1000: system
- δT_COM: availability interval of content data at the output of the processing module,
- δT_LAB: availability interval of content data from the laboratory
- ΔT: sampling interval at the input of a processing module
- M: training repetitions
- RC: reliability classification

As mentioned, radiation data λ1, λ2 are given without phase indication.

## Claims

1. Computer-implemented method (403) to estimate the content (273) of a particular chemical element in molten material (303) that is available at an opening (113) of a metallurgical vessel (103), the method (403) comprising the following steps:
a computer (203) receiving (413) time-series radiation data (153-P) that represent the thermal radiation from the molten material (303) at the opening (113), for at least two wavelengths (λ1, λ2), wherein the computer (203) receives the radiation data (153-P) from a pyrometer (143-P) that is arranged to monitor the opening (113);
the computer (203) identifying features from the radiation data (153-P) and providing feature data (153-Q) according to a plurality of feature enhancement rules,
wherein the enhancement rules refer to pre-processing radiation data to identify features in the time-series that are local characteristics, patterns in the curvature of the time-series in respect of an individual wavelength, the first derivative of the time-series, or the presence of inflection points,
wherein the radiation data (153-P) together with the feature data (153-Q) becomes feature-enhanced radiation data (150-F); and
the computer (203) operating (453) a processing module (253) that processes the feature-enhanced radiation data (153-F), wherein the processing module (253) has a regression model configured to estimate the content (273) of the particular chemical element, wherein the processing module (253) has been trained in advance.

2. Method (403) according to claim 1, wherein the step operating (453) the processing module (253) comprises to operate a module (253/252) that has been trained by training data (241) collected during a data-collection phase (**1), wherein the training data (241) is a combination of historical radiation data (151-P), and historical content data (371) obtained by measurements on samples (311) taken from the molten material (301) at the opening (111), and wherein training data (241) further comprises the feature data (151-Q) that are identified according to the plurality of feature enhancement rules.

3. Method (403) according to claim 2, wherein the feature data (151-Q) have been identified according to the plurality of feature enhancement rules when the data-collection phase (**1) has been completed.

4. Method (400) according to any of claims 1 to 3, wherein
in a further receiving step (423), the computer (203) receives sensor data (150-X, 153-X) from sensors that are arranged to monitor the vessel (103); and
in the step operating (453) the processing module (253), the computer (203) processes the feature-enhanced radiation data (153-F) in combination with the sensor data (150-X, 153-X).

5. Method (400) according to claim 4, wherein, after receiving (423) sensor data (150-X, 153-X), the computer uses an auxiliary machine learning tool (260) to perform adapting (433) the sensor data to obtain intermediate data, and wherein the computer performs the step operating (453) the processing module (253) with the intermediate data.

6. Method (400) according to claim 5, wherein the computer performs adapting (433) by using an auxiliary machine learning tool (260) that is an autoencoder.

7. Method (403) according to any of claims 1 to 6, wherein the molten material (123) is a composition ({C, Fe, S, Si}) that comprises molten metal or a metal alloy, and wherein the particular chemical element is selected from Carbon (C), Silicon (Si), Iron (Fe) and Sulphur (S).

8. Method (400) according to claim 7, wherein the method steps (413, 423, 453) are applied for the metallurgical vessel (101/103) being a blast furnace, for that the opening (123) comprises a tap-hole and runner to transport the material away from the blast furnace during casting.

9. Method (400) according to claim 8, with the further step of presenting the estimation with the content data (273) to an operator (193) of the blast furnace (100).

10. Using the method (403) according to claims 1 to 9 in repetitions to control the operation of the vessel (103).

11. A computer program product that, when loaded into a memory of a computer system and executed by at least one processor of the computer system, causes the computer system to perform the steps of a computer-implemented method according to any of the claims 1 to 9.

12. A computer system comprising a plurality of modules configured to perform the steps of the computer-implemented method according to any of the claims 1 to 9.

13. A system (1000) for estimating the content of a particular chemical element in molten material that is available at an opening (110) of a metallurgical vessel (100), the system comprising:
a pyrometer (140-P) that is adapted to monitor the opening (110) and to provide time-series radiation data (150-P) that represent the thermal radiation from the molten material (300) at the opening (110), for at least two wavelengths (λ1, λ2);
a camera (140-C) that is adapted to monitor the opening (110) or the path (110/140) between the opening (110) and the pyrometer (140-P), to provide one or more images (150-C) showing the opening or the path;
a computer (200) with a feature-enhancer module (280), an estimation module (250) and with an image classification module (260),
wherein the feature-enhancer module (280) is adapted to process the radiation data (150-P) to feature data (150-Q) according to a plurality of feature enhancement rules,
wherein the enhancement rules refer to pre-processing radiation data to identify features in the time-series that are local characteristics, patterns in the curvature of the time-series at an individual wavelength, the first derivative of the time-series, or the presence of inflection points,
wherein the radiation data (153-P) together with the feature data (150-Q) becomes feature-enhanced radiation data (150-F);
wherein the estimation module (250) is adapted to process the feature-enhanced radiation data (150-F) with a regression model to provide an estimation with preliminary content data (270') for the particular chemical element in the molten material, wherein the estimation module (250) has been trained by training data (241) collected during a data-collection phase (**1), wherein the collected data is a combination of historical radiation data (151-P), and historical content data (371) obtained by measurements on samples (311) taken from the molten material (301) at the opening (111), with the training data (241) further comprising feature data that are identified according to the plurality of feature enhancement rules; and
wherein the image classification module (260) is adapted to classify the one or more images (150-C) to identify phenomena (160) at the opening (110) or at the path (110/140), and to subsequently - according to the identified phenomena (160) - provide a reliability classification (RC) for the radiation data, so that the computer outputs preliminary content data (270') as content data (270) only if the reliability classification (RC) complies with a pre-defined rule.

14. The system (1000) of claim 13, wherein the phenomena (160) selectively comprise at least one of the following: accretion, fumes or reflections, located in the path (110/140); degree of alignment of the pyrometer to the opening (110); and share of metal and slag on the images.

## Patentansprüche

1. Computerimplementiertes Verfahren (403) zum Schätzen des Inhalts (273) eines bestimmten chemischen Elements in geschmolzenem Material (303), das an einer Öffnung (113) eines metallurgischen Gefäßes (103) verfügbar ist, wobei das Verfahren (403) die folgenden Schritte umfasst:
das Empfangen (413), durch einen Computer (203), von Zeitreihen-Strahlungsdaten (153-P), die die thermische Strahlung von dem geschmolzenen Material (303) an der Öffnung (113) darstellen, für mindestens zwei Wellenlängen (λ1, λ2), wobei der Computer (203) die Strahlungsdaten (153-P) von einem Pyrometer (143-P) empfängt, das angeordnet ist, um die Öffnung (113) zu überwachen;
Identifizieren, durch den Computer (203), von Merkmalen von den Strahlungsdaten (153-P) und Bereitstellen der Merkmalsdaten (153-Q) gemäß einer Vielzahl von Merkmalsverstärkungsregeln,
wobei sich die Verstärkungsregeln auf die Vorverarbeitung der Strahlungsdaten beziehen, um Merkmale in der Zeitreihe zu identifizieren, wobei es sich um lokale Kennzeichen, Muster in der Krümmung der Zeitreihe in Bezug auf eine individuelle Wellenlänge, die erste Ableitung der Zeitreihe oder das Vorliegen von Wendepunkten handelt,
wobei die Strahlungsdaten (153-P) zusammen mit den Merkmalsdaten (153-Q) zu merkmalsverstärkten Strahlungsdaten (150-F) werden; und
Betreiben (453), durch den Computer (203), eines Verarbeitungsmoduls (253), das die merkmalsverstärkten Strahlungsdaten (153-F) verarbeitet, wobei das Verarbeitungsmodul (253) ein Regressionsmodell aufweist, das dafür konfiguriert ist, den Inhalt (273) des bestimmten chemischen Elements zu schätzen, wobei das Verarbeitungsmodul (253) im Voraus trainiert worden ist.

2. Verfahren (403) nach Anspruch 1, wobei der Schritt zum Betreiben (453) des Verarbeitungsmoduls (253) umfasst, ein Modul (253/252) zu betreiben, das anhand von Trainingsdaten (241) trainiert worden ist, die während einer Datenerfassungsphase (**1) erfasst worden sind, wobei es sich bei den Trainingsdaten (241) um eine Kombination aus historischen Strahlungsdaten (151-P) und historischen Inhaltsdaten (371) handelt, die durch Messungen an Proben (311) erhalten worden sind, die aus dem geschmolzenen Material (301) an der Öffnung (111) entnommen worden sind, und wobei die Trainingsdaten (241) ferner die Merkmalsdaten (151-Q) umfassen, die gemäß der Vielzahl von Merkmalsverstärkungsregeln identifiziert wurden.

3. Verfahren (403) nach Anspruch 2, wobei die Merkmalsdaten (151-Q) gemäß der Vielzahl von Merkmalsverstärkungsregeln identifiziert worden sind, wenn die Datenerfassungsphase (**1) abgeschlossen worden ist.

4. Verfahren (400) nach einem der Ansprüche 1 bis 3, wobei
in einem weiteren Empfangsschritt (423) der Computer (203) Sensordaten (150-X, 153-X) von Sensoren empfängt, die angeordnet sind, um das Gefäß (103) zu überwachen; und
in dem Schritt zum Betreiben (453) des Verarbeitungsmoduls (253) der Computer (203) die merkmalsverstärkten Strahlungsdaten (153-F) in Kombination mit den Sensordaten (150-X, 153-X) verarbeitet.

5. Verfahren (400) nach Anspruch 4, wobei, nach dem Empfangen (423) von Sensordaten (150-X, 153-X), der Computer ein hilfsweises Werkzeug für maschinelles Lernen (260) verwendet, um ein Anpassen (433) der Sensordaten durchzuführen, um Zwischendaten zu erhalten, und wobei der Computer den Schritt zum Betreiben (453) des Verarbeitungsmoduls (253) mit den Zwischendaten durchführt.

6. Verfahren (400) nach Anspruch 5, wobei der Computer das Anpassen (433) unter Verwendung eines hilfsweisen Werkzeugs zum maschinellen Lernen (260) durchführt, wobei es sich um einen Autoencoder handelt.

7. Verfahren (403) nach einem der Ansprüche 1 bis 6, wobei es sich bei dem geschmolzenen Material (123) um eine Zusammensetzung ({C, Fe, S, Si}) handelt, die geschmolzenes Metall oder eine Metalllegierung umfasst, und wobei das bestimmte chemische Element aus Kohlenstoff (C), Silicium (Si), Eisen (Fe) und Schwefel (S) ausgewählt ist.

8. Verfahren (400) nach Anspruch 7, wobei die Verfahrensschritte (413, 423, 453) für das metallurgische Gefäß (101/103) angewendet werden, bei dem es sich um einen Hochofen handelt, bei dem die Öffnung (123) ein Abstichloch und einen Angießkanal umfasst, um das Material während des Gießens weg von dem Hochofen zu transportieren.

9. Verfahren (400) nach Anspruch 8 mit dem weiteren Schritt des Präsentierens der Schätzung mit den Inhaltsdaten (273) an einen Betreiber (193) des Hochofens (100).

10. Verwendung des Verfahrens (403) nach den Ansprüchen 1 bis 9 in Wiederholungen, um den Betrieb des Gefäßes (103) zu steuern.

11. Computerprogrammprodukt, das, wenn es in einen Speicher eines Computersystems geladen und von mindestens einem Prozessor des Computersystems ausgeführt wird, das Computersystem veranlasst, die Schritte eines computerimplementierten Verfahrens nach einem der Ansprüche 1 bis 9 auszuführen.

12. Computersystem, umfassend eine Vielzahl von Modulen, die dafür konfiguriert sind, die Schritte des computerimplementierten Verfahrens nach einem der Ansprüche 1 bis 9 durchzuführen.

13. System (1000) zum Schätzen des Inhalts eines bestimmten chemischen Elements in geschmolzenem Material, das an einer Öffnung (110) eines metallurgischen Gefäßes (100) verfügbar ist, wobei das System Folgendes umfasst:
ein Pyrometer (140-P), das dazu geeignet ist, die Öffnung (110) zu überwachen und Zeitreihen-Strahlungsdaten (150-P), die die thermische Strahlung von dem geschmolzenen Material (300) an der Öffnung (110) darstellen, für mindestens zwei Wellenlängen (λ1, λ2) bereitzustellen;
eine Kamera (140-C), die dazu geeignet ist, die Öffnung (110) oder den Pfad (110/140) zwischen der Öffnung (110) und dem Pyrometer (140-P) zu überwachen, um ein oder mehrere Bilder (150-C) bereitzustellen, die die Öffnung oder den Pfad zeigen;
einen Computer (200) mit einem Merkmalsverstärkermodul (280), einem Schätzmodul (250) und mit einem Bildklassifizierungsmodul (260),
wobei das Merkmalsverstärkermodul (280) dazu geeignet ist, gemäß einer Vielzahl von Merkmalsverstärkungsregeln die Strahlungsdaten (150-P) zu Merkmalsdaten (150-Q) zu verarbeiten,
wobei sich die Verstärkungsregeln auf die Vorverarbeitung der Strahlungsdaten beziehen, um Merkmale in der Zeitreihe zu identifizieren, wobei es sich um lokale Kennzeichen, Muster in der Krümmung der Zeitreihe bei einer individuellen Wellenlänge, die erste Ableitung der Zeitreihe oder das Vorliegen von Wendepunkten handelt,
wobei die Strahlungsdaten (153-P) zusammen mit den Merkmalsdaten (150-Q) zu merkmalsverstärkten Strahlungsdaten (150-F) werden;
wobei das Schätzmodul (250) dazu geeignet ist, die merkmalsverstärkten Strahlungsdaten (150-F) mit einem Regressionsmodell zu verarbeiten, um eine Schätzung mit vorläufigen Inhaltsdaten (270') für das bestimmte chemische Element in dem geschmolzenen Material bereitzustellen, wobei das Schätzmodul (250) anhand von Trainingsdaten (241) trainiert worden ist, die während einer Datenerfassungsphase (**1) erfasst wurden, wobei es sich bei den erfassten Daten um eine Kombination aus historischen Strahlungsdaten (151-P) und historischen Inhaltsdaten (371) handelt, die durch Messungen an Proben (311) erhalten worden sind, die aus dem geschmolzenen Material (301) an der Öffnung (111) entnommen worden sind, wobei die Trainingsdaten (241) ferner Merkmalsdaten umfassen, die gemäß der Vielzahl von Merkmalsverstärkungsregeln identifiziert wurden; und
wobei das Bildklassifizierungsmodul (260) dazu geeignet ist, das eine oder die mehreren Bilder (150-C) zu klassifizieren, um Phänomene (160) an der Öffnung (110) oder an dem Pfad (110/140) zu identifizieren, und anschließend - gemäß den identifizierten Phänomenen (160) - eine zuverlässige Klassifizierung (RC) für die Strahlungsdaten bereitzustellen, so dass der Computer nur dann vorläufige Inhaltsdaten (270') als Inhaltsdaten (270) ausgibt, wenn die Zuverlässigkeitsklassifizierung (RC) eine vordefinierte Regel erfüllt.

14. System (1000) nach Anspruch 13, wobei die Phänomene (160) selektiv mindestens eines der folgenden umfassen: Ansetzen, Abgase oder Reflexionen, die sich in dem Pfad (110/140) befinden; das Ausmaß der Ausrichtung des Pyrometers mit der Öffnung (110) und den Anteil von Metall und Schlacke auf den Bildern.

## Revendications

1. Procédé mis en œuvre par ordinateur (403) pour estimer la teneur (273) d'un élément chimique particulier dans un matériau fondu (303) qui est disponible au niveau d'une ouverture (113) d'un récipient métallurgique (103), le procédé (403) comprenant les étapes suivantes :
un ordinateur (203) recevant (413) des données de rayonnement en série chronologique (153-P) qui représentent le rayonnement thermique provenant du matériau fondu (303) au niveau de l'ouverture (113), pour au moins deux longueurs d'onde (λ1, λ2), l'ordinateur (203) recevant les données de rayonnement (153-P) provenant d'un pyromètre (143-P) qui est agencé pour surveiller l'ouverture (113) ;
l'ordinateur (203) identifiant des caractéristiques à partir des données de rayonnement (153-P) et fournissant des données de caractéristiques (153-Q) selon une pluralité de règles d'amélioration de caractéristiques,
dans lequel les règles d'amélioration font référence au prétraitement des données de rayonnement pour identifier des caractéristiques dans la série chronologique qui sont des caractéristiques locales, des modèles de courbure de la série chronologique par rapport à une longueur d'onde individuelle, la dérivée première de la série chronologique ou la présence de points d'inflexion,
dans lequel les données de rayonnement (153-P) conjointement avec les données de caractéristiques (153-Q) deviennent des données de rayonnement à caractéristiques améliorées (150-F) ; et
l'ordinateur (203) faisant fonctionner (453) un module de traitement (253) qui traite les données de rayonnement à caractéristiques améliorées (153-F), dans lequel le module de traitement (253) a un modèle de régression configuré pour estimer la teneur (273) de l'élément chimique particulier, dans lequel le module de traitement (253) a été entraîné à l'avance.

2. Procédé (403) selon la revendication 1, dans lequel l'étape de fonctionnement (453) du module de traitement (253) comprend le fait de faire fonctionner un module (253/252) qui a été entraîné par des données d'apprentissage (241) collectées lors d'une phase de collecte de données (**1), dans lequel les données d'apprentissage (241) sont une combinaison de données de rayonnement historiques (151-P) et de données de teneur historiques (371) obtenues par des mesures sur des échantillons (311) prélevés à partir du matériau fondu (301) au niveau de l'ouverture (111), et dans lequel les données d'apprentissage (241) comprennent en outre les données de caractéristiques (151-Q) qui sont identifiées selon la pluralité de règles d'amélioration de caractéristiques.

3. Procédé (403) selon la revendication 2, dans lequel les données de caractéristiques (151-Q) ont été identifiées selon la pluralité de règles d'amélioration de caractéristiques lorsque la phase de collecte de données (**1) a été achevée.

4. Procédé (400) selon l'une quelconque des revendications 1 à 3, dans lequel
dans une autre étape de réception (423), l'ordinateur (203) reçoit des données de capteur (150-X, 153-X) provenant de capteurs qui sont agencés pour surveiller le récipient (103) ; et
à l'étape de fonctionnement (453) du module de traitement (253), l'ordinateur (203) traite les données de rayonnement améliorées (153-F) en combinaison avec les données du capteur (150-X, 153-X).

5. Procédé (400) selon la revendication 4, dans lequel, après la réception (423) des données de capteur (150-X, 153-X), l'ordinateur utilise un outil auxiliaire d'apprentissage automatique (260) pour effectuer l'adaptation (433) des données de capteur pour obtenir des données intermédiaires, et dans lequel l'ordinateur effectue l'étape de fonctionnement (453) du module de traitement (253) avec les données intermédiaires.

6. Procédé (400) selon la revendication 5, dans lequel l'ordinateur effectue une adaptation (433) en utilisant un outil auxiliaire d'apprentissage automatique (260) qui est un auto-encodeur.

7. Procédé (403) selon l'une quelconque des revendications 1 à 6, dans lequel le matériau fondu (123) est une composition ({C, Fe, S, Si}) qui comprend du métal fondu ou un alliage de métaux, et dans lequel l'élément chimique particulier est choisi parmi le carbone (C), le silicium (Si), le fer (Fe) et le soufre (S).

8. Procédé (400) selon la revendication 7, dans lequel les étapes de procédé (413, 423, 453) sont appliquées pour le récipient métallurgique (101/103) qui est un haut fourneau, pour que l'ouverture (123) comporte un trou de coulée et un chenal de coulée pour transporter le matériau loin du haut fourneau pendant la coulée.

9. Procédé (400) selon la revendication 8, avec l'étape supplémentaire de présentation de l'estimation avec les données de teneur (273) à un opérateur (193) du haut fourneau (100).

10. Utilisation du procédé (403) selon les revendications 1 à 9 en répétitions pour commander le fonctionnement du récipient (103).

11. Produit de programme informatique qui, lorsqu'il est chargé dans une mémoire d'un système informatique et exécuté par au moins un processeur du système informatique, amène le système informatique à exécuter les étapes d'un procédé mis en œuvre par ordinateur selon l'une quelconque des revendications 1 à 9.

12. Système informatique comprenant une pluralité de modules configurés pour exécuter les étapes du procédé mis en œuvre par ordinateur selon l'une quelconque des revendications 1 à 9.

13. Système (1000) d'estimation de la teneur d'un élément chimique particulier dans un matériau fondu qui est disponible au niveau d'une ouverture (110) d'un récipient métallurgique (100), le système comprenant :
un pyromètre (140-P) qui est conçu pour surveiller l'ouverture (110) et pour fournir des données de rayonnement en série chronologique (150-P) qui représentent le rayonnement thermique du matériau fondu (300) au niveau de l'ouverture (110), pour au moins deux longueurs d'onde (λ1, λ2) ;
une caméra (140-C) qui est conçue pour surveiller l'ouverture (110) ou le trajet (110/140) entre l'ouverture (110) et le pyromètre (140-P), pour fournir une ou plusieurs images (150-C) montrant l'ouverture ou le trajet ;
un ordinateur (200) doté d'un module d'amélioration de caractéristiques (280), d'un module d'estimation (250) et d'un module de classification d'images (260),
dans lequel le module d'amélioration de caractéristiques (280) est conçu pour traiter les données de rayonnement (150-P) en données de caractéristiques (150-Q) selon une pluralité de règles d'amélioration de caractéristiques,
dans lequel les règles d'amélioration font référence au prétraitement des données de rayonnement pour identifier des caractéristiques dans la série chronologique qui sont des caractéristiques locales, des modèles de courbure de la série chronologique à une longueur d'onde individuelle, la dérivée première de la série chronologique, ou la présence de points d'inflexion,
dans lequel les données de rayonnement (153-P) conjointement avec les données de caractéristiques (150-Q) deviennent des données de rayonnement à caractéristiques améliorées (150-F) ;
dans lequel le module d'estimation (250) est conçu pour traiter les données de rayonnement à caractéristiques améliorées (150-F) avec un modèle de régression pour fournir une estimation avec des données de teneur préliminaires (270') pour l'élément chimique particulier dans le matériau fondu, dans lequel le module d'estimation (250) a été entraîné par des données d'apprentissage (241) collectées pendant une phase de collecte de données (**1), dans lequel les données collectées sont une combinaison de données de rayonnement historiques (151-P) et de données de teneur historique (371) obtenues par des mesures sur des échantillons (311) prélevés à partir du matériau fondu (301) au niveau de l'ouverture (111), les données d'apprentissage (241) comprenant en outre des données de caractéristiques qui sont identifiées selon la pluralité de règles d'amélioration de caractéristiques ; et
dans lequel le module de classification d'images (260) est conçu pour classer l'image ou les images (150-C) afin d'identifier des phénomènes (160) au niveau de l'ouverture (110) ou au niveau du trajet (110/140), et pour ensuite - en fonction des phénomènes identifiés (160) - fournir une classification de fiabilité (RC) pour les données de rayonnement, de sorte que l'ordinateur délivre des données de teneur préliminaires (270') en tant que données de teneur (270) uniquement si la classification de fiabilité (RC) est conforme à une règle prédéfinie.

14. Système (1000) selon la revendication 13, dans lequel les phénomènes (160) comprennent sélectivement au moins l'un des éléments suivants : une accrétion, des fumées ou des réflexions, situées dans le trajet (110/140) ; un degré d'alignement du pyromètre sur l'ouverture (110) ; ainsi que la part de métal et de scories sur les images.
